(19)

Europäisches
Patentamt
European
Patent Office
Office européen
des brevets

(11) **EP 4 181 414 A1**

(12) **EUROPEAN PATENT APPLICATION**

(43) Date of publication:
**17.05.2023 Bulletin 2023/20**

(21) Application number: **21207933.9**

(22) Date of filing: **12.11.2021**

(51) International Patent Classification (IPC):
**H04B 7/0456** (2017.01)   **H04B 7/06** (2006.01)
**H04B 7/08** (2006.01)   **G06N 3/02** (2006.01)

(52) Cooperative Patent Classification (CPC):
**H04B 7/0695; G06N 3/02; H04B 7/0456;**
**H04B 7/088**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(71) Applicant: **Nokia Technologies Oy
02610 Espoo (FI)**

(72) Inventors:
• **BARBU, Oana-Elena
9000 Aalborg (DK)**

• **KEATING, Ryan
Chicago, 60622 (US)**
• **HARREBEK, Johannes
9000 Aalborg (DK)**
• **VEJLGAARD, Benny
9260 Gistrup (DK)**

(74) Representative: **Nokia EPO representatives
Nokia Technologies Oy
Karakaari 7
02610 Espoo (FI)**

(54) **SELECTING POSITIONING BEAMS FOR DOWNLINK POSITIONING**

(57)      It is inter-alia disclosed a terminal device comprising:
- means for measuring, for each candidate positioning beam pair of a first subset of candidate positioning beam pairs, at least one respective positioning reference signal metric, wherein the first subset of candidate positioning beam pairs is a subset of a plurality of candidate positioning beam pairs, wherein each candidate positioning beam pair of the plurality of candidate positioning beam pairs represents a combination of a respective receive beam of the terminal device and a respective transmit beam of a respective network node of one or more network nodes;
- means for estimating, for each candidate positioning beam pair of a second subset of candidate positioning beam pairs, at least one respective positioning reference signal metric at least partially based on the measured positioning reference signal metrics, wherein the second subset of candidate positioning beam pairs comprises one or more candidate positioning beam pairs of the plurality of candidate positioning beam pairs that is/are not part of the first subset of candidate positioning beam pairs;
- means for selecting, at least partially based on the measured positioning reference signal metrics and the estimated positioning reference signal metrics, one or more candidate positioning beam pairs from the plurality of candidate positioning beam pairs as positioning beam pairs for downlink positioning.

Fig.3

**Description**

**TECHNICAL FIELD**

Various example embodiments according to the present disclosure relate to communication networks, such as wireless radio networks comprising terminal devices and network nodes communicating with each other. Specifically, various example embodiments according to the present disclosure relate to beam selection for downlink positioning in such a communication network.

**BACKGROUND**

Various example embodiments according to the present disclosure are related but not limited to communication networks as defined by the 3GPP standard, such as the 5G standard, also referred to as New Radio (NR).
5G NR makes extensive use of beamforming, in both uplink (UL) and downlink (DL). In particular, in 5G NR at mmWave (commonly called FR2) support for beamforming on both the network side and the terminal side may be introduced. In long term evolution (LTE), positioning reference signals (PRSs) were normally transmitted with a wide beam covering a large area and received by an omnidirectional. With beamforming in 5G NR, the different network nodes transmitting the PRSs and the terminal device receiving the PRSs may determine towards which direction to point their respective positioning beams.

**SUMMARY OF SOME EXEMPLARY EMBODIMENTS**

Various example embodiments according to the present disclosure may provide a solution for beam selection for downlink positioning. Specifically, certain exemplary embodiments according to the present disclosure may provide a more efficient solution for beam selection for downlink positioning having a reduced latency in comparison to an exhaustive beam sweeping according to the examples described above.
A terminal is disclosed, the terminal comprising:

- means for measuring, for each candidate positioning beam pair of a first subset of candidate positioning beam pairs, at least one respective positioning reference signal metric, wherein the first subset of candidate positioning beam pairs is a subset of a plurality of candidate positioning beam pairs, wherein each candidate positioning beam pair of the plurality of candidate positioning beam pairs represents a combination of a respective receive beam of the terminal device and a respective transmit beam of a respective network node of one or more network nodes;
- means for estimating, for each candidate positioning beam pair of a second subset of candidate positioning beam pairs, at least one respective positioning reference signal metric at least partially based on the measured positioning reference signal metrics, wherein the second subset of candidate positioning beam pairs comprises one or more candidate positioning beam pairs of the plurality of candidate positioning beam pairs that is/are not part of the first subset of candidate positioning beam pairs;
- means for selecting, at least partially based on the measured positioning reference signal metrics and the estimated positioning reference signal metrics, one or more candidate positioning beam pairs from the plurality of candidate positioning beam pairs as positioning beam pairs for downlink positioning.

For example, the means of the terminal device are for example configured to perform the method as disclosed below.
The means of the disclosed terminal device can be implemented in hardware and/or software. They may comprise one or multiple modules or units providing the respective functionality. They may for example comprise at least one processor for executing computer program code for performing the required functions, at least one memory storing the program code, or both. Alternatively, they could comprise for example circuitry that is designed to implement the required functions, for example implemented in a chipset or a chip, like an integrated circuit. In general, the means may comprise for example one or more processing means or processors.
In particular, there is also disclosed a terminal device comprising at least one processor and at least one memory including computer program code, the at least one memory and the computer program code configured to, with the at least one processor, cause the terminal device at least to perform the required functions, for example at least to perform the method as disclosed below.
Moreover, a method, performed at least by a terminal device is disclosed, the method comprising:

- measuring, for each candidate positioning beam pair of a first subset of candidate positioning beam pairs, at least one respective positioning reference signal metric, wherein the first subset of candidate positioning beam pairs is a subset of a plurality of candidate positioning beam pairs, wherein each candidate positioning beam pair of the plurality of candidate positioning beam pairs represents a combination of a respective receive beam of the terminal device and a respective transmit beam of a respective network node of one or more network nodes;

- estimating, for each candidate positioning beam pair of a second subset of candidate positioning beam pairs, at least one respective positioning reference signal metric at least partially based on the measured positioning reference signal metrics, wherein the second subset of candidate positioning beam pairs comprises one or more candidate positioning beam pairs of the plurality of candidate positioning beam pairs that is/are not part of the first subset of candidate positioning beam pairs;

- selecting, at least partially based on the measured positioning reference signal metrics and the estimated positioning reference signal metrics, one or more candidate positioning beam pairs from the plurality of candidate positioning beam pairs as positioning beam pairs for downlink positioning.

For example, the disclosed method may be performed at least by the disclosed terminal device.

Moreover, a computer program code is disclosed, the computer program code when executed by a processor of an apparatus causing the apparatus to perform the disclosed method.

The computer program may be stored on computer-readable storage medium, in particular a tangible and/or non-transitory medium. The computer readable storage medium could for example be a disk or a memory or the like. The computer program could be stored in the computer readable storage medium in the form of instructions encoding the computer-readable storage medium. The computer readable storage medium may be intended for taking part in the operation of a device, like an internal or external memory, for example a Read-Only Memory (ROM) or hard disk of a computer, or be intended for distribution of the program, like an optical disc.

Moreover, a system is disclosed comprising the disclosed terminal device and one or more network nodes.

In the following, exemplary aspects of the disclosed terminal device, the disclosed method and the disclosed computer program code are disclosed.

Generally, a terminal device may be understood to be a stationary device or a mobile device like a user equipment. For example, a terminal device may be understood to any device enabled for communication with a respective communication network. Such a terminal device may in particular be a smart phone, a tablet, a wearable, a smartwatch, a low power device, an Internet-of-Things (IoT) device, a vehicle like a connected car or the like.

A network node may be understood to be a hardware and/or software component implementing a certain network functionality such as a base station of a communication system or network. For example, such a network node may be implemented in or be a respective single device or module; alternatively, it may also be implemented across or comprise multiple respective devices or modules.

According to the present disclosure, positioning reference signals (PRSs) transmitted from the one or more network nodes are for example to be used for downlink positioning of the terminal device.

For example, one or more (e.g. each) of the one or more network nodes may support (e.g. may be enabled or configured to use) at least two (e.g. four) different transmit beams for transmitting the respective PRS, and the terminal device may support (e.g. may be enabled or configured to use) at least two (e.g. four) different receive beams for receiving the respective PRS. The plurality of candidate positioning beam pairs may be understood to represent (e.g. all) available combinations of receive beams of the terminal device and transmit beams of the one or more network nodes. A respective combination of a respective receive beam and a respective transmit beam of a respective network node may be considered to be available if this combination is possible (e.g. supported by the terminal device and the respective network node).

A candidate positioning beam pair represents such a combination of a respective receive beam of the terminal device and a respective transmit beam of a respective network node. For example, the respective receive beam may be used at the terminal device along with the respective transmit beam at the network node respective for the purpose of performing positioning measurements. It is to be understood that a candidate positioning beam pair (and a positioning beam pair) may be the same or different than a beam pair used for data communication.

The first subset of candidate positioning beam pairs and the second subset of candidate positioning beam pairs are subsets of the plurality of candidate positioning beam pairs. For example, the first subset of candidate positioning beam pairs and the second subset of candidate positioning beam pairs are complements and/or the union of the first subset of candidate positioning beam pairs and the second subset of candidate positioning beam pairs equals the plurality of candidate positioning beam pairs.

A positioning reference signal (PRS) metric measured or estimated for a specific candidate positioning beam pair may be understood to be a metric which qualitatively or quantitatively indicates a reception quality of the corresponding PRS transmitted and received by use of the combination of transmit beam and receive beam represented by this specific candidate positioning beam pair. A few non limiting examples of such a PRS metric are (i) a Received Signal Strength Indicator (RSSI); or (ii) a Reference Signal Received Power (RSRP); or (iii) a Signal-to-Noise Ratio (SNR); (iv) or a power of the strongest channel tap; or (v) a Carrier-to-Interference Ratio (CIR).

For example, measuring a PRS metric for a candidate positioning beam pair may be understood to mean determining the PRS metric based on a PRS received by the terminal device such that the measured PRS metric qualitatively or quantitatively indicates a perceived reception quality of the specific PRS; and estimating a PRS metric for a specific candidate positioning beam pair may be understood to mean determining the PRS metric based on PRS metrics measured for other candidate positioning beam pairs such that the estimated PRS metric qualitatively or quantitatively indicates an expected reception quality of a specific PRS. In other words, a measured PRS metric (e.g. each measured PRS metric) may indicate a perceived reception quality (e.g. a respective reception quality that was perceived by the terminal device when it received the respective PRS); and an estimated PRS metric (e.g. each estimated PRS metric) may indicate an expected reception quality (e.g. a respective reception quality that is expected to be perceived by the terminal device when it receives the respective PRS).

Selecting, at least partially based on the measured positioning reference signal metrics and the estimated PRS metrics, one or more candidate positioning beam pairs from the plurality of candidate positioning beam pairs as positioning beam pairs for downlink positioning may be understood to mean that, for each network node of the one or more network nodes, one respective candidate positioning beam pair from the plurality of candidate positioning beam pairs is selected as respective positioning beam pair for downlink positioning. For example, for each network node of the one or more network nodes, the respective candidate positioning beam pair from the plurality of candidate positioning beam pairs for which the PRS metric indicating the best reception quality of a PRS transmitted by the respective network node is estimated or measured.

A positioning beam pair for downlink positioning may be understood to represent a combination of a transmit beam and a receive beam that is to be used for transmitting and receiving a PRS for downlink positioning.

In the following, further exemplary embodiments of the present disclosure will be described in more detail.

According to an exemplary embodiment, measuring, for each candidate positioning beam pair of a subset of candidate positioning beam pairs, at least one respective PRS metric comprises, for each candidate positioning beam pair of a subset of candidate positioning beam pairs:

- receiving a respective PRS that is (i) transmitted by the respective network node by using the transmit beam represented by the respective candidate positioning beam pair and (ii) received by the terminal device by using the respective receive beam represented by the respective candidate positioning beam;
- determining at least one respective PRS metric based on the received respective PRS.

According to an exemplary embodiment, the plurality of candidate positioning beam pairs represents (e.g. all) available combinations of receive beams of the terminal device and transmit beams of the one or more network nodes.

In the following, the number of the one or more network nodes is denoted by X, each network node of the one or more network nodes is denoted by a respective network node index x (e.g. x = 1:X), the total number transmit beams supported by each of the one or more network nodes is denoted by L, each transmit beam is denoted by a respective transmit beam index l (e.g. l = 1:L), the total number of receive beams supported by the terminal device is denoted by R and each receive beam is denoted by a respective receive beam index r (e.g. r = 1:R). Accordingly, the number N of all available combinations of receive beams of the terminal device and transmit beams of the one or more network nodes can be calculated as follows: $N = X * L * R$. Moreover, a (e.g. candidate) positioning beam pair representing a receive beam r of the terminal device and a transmit beam l of the network node x can be denoted by (r, l, x).

Considering the exemplary case as disclosed above that (i) PRS from ten different network nodes (i.e. X = 10) are to be used for downlink positioning of the terminal device and (ii) each network node of the ten different network nodes supports four transmit beams (i.e. L = 4) and (iii) the terminal device supports four receive beams (i.e. R = 4), this means that there are $N = X * L * R$ = 10 * 4 * 4 = 160 combinations of receive beams and transmit beams available which are represented by the plurality of plurality of candidate positioning beam pairs according to this exemplary embodiment.

According to an exemplary embodiment, (i) the disclosed terminal device further comprises :

- means for determining the first subset of candidate positioning beam pairs; and (ii) the disclosed method further comprises:
- determining the first subset of candidate positioning beam pairs.

For example, the first subset of candidate positioning beam pairs may be determined such that it represents, for each network node of the one or more network nodes, combinations of $\frac{R}{a}$ receive beams of the terminal device and $\frac{L}{b}$ transmit beams of the respective network node. Parameters a and b may be predetermined or selected as a tradeoff between accuracy and latency. For example, parameters a and b may be represented by assistance information received by the terminal device (e.g. from the serving network node of the terminal device). Alternatively or additionally, the desired accuracy and/or the desired latency may be represented by assistance information received by the terminal device (e.g. from the serving network node of the terminal device) such that the terminal device can select parameters a and based on the desired accuracy and/or the desired latency. Without limiting the present disclosure, the assistance information could for example be signaled as part of the LTE positioning protocol.

Selecting a = 1 and b =1 results in an exhaustive beam sweeping as known from the prior art such that parameters a and b are greater than 1 according to the present disclosure, for example a = 2 or a = 4, b = 4 or b = 8.

According to an exemplary embodiment, the first subset of candidate positioning beam pairs is determined by at least one of:

(i) selecting candidate positioning beam pairs from the plurality of candidate positioning beam pairs; or
(ii) randomly selecting candidate positioning beam pairs from the plurality of candidate positioning beam pairs; or
(iii) selecting, for each network node of the one or more network nodes, candidate positioning beam pairs from the plurality of candidate positioning beam pairs representing at least substantially equally spaced receive beams of the terminal device and/or at least substantially equally spaced transmit beams of the respective network node; or
(iv) selecting candidate positioning beam pairs from the plurality of candidate positioning beam pairs based on at least one of (i) beam widths of the beams, or (ii) spatial diversity of the beams, or (iii) time.

Each candidate positioning beam pair from the plurality of candidate positioning beam pairs represents a respective combination of a respective receive beam of the terminal device and a respective transmit beam of a respective network node of the one or more network nodes.

For example, the first subset of candidate positioning beam pairs may be determined by selecting candidate positioning beam pairs from the plurality of candidate positioning beam pairs by (i) selecting, for each network node of the one or more network nodes, respective $\frac{R}{a}$ receive beams of the terminal device and respective $\frac{L}{b}$ transmit beams of the respective network node and (ii) determining the first subset of candidate positioning beam pairs such that it represents, for each network node of the one or more network nodes, (e.g. all) combinations of the selected respective $\frac{R}{a}$ receive beams of the terminal device and the selected respective $\frac{L}{b}$ transmit beams of the respective network node.

In the following, the subset of the selected respective $\frac{R}{a}$ receive beams of the terminal device is denoted by $S_{UE}$ and the subset of the selected respective $\frac{L}{b}$ transmit beams of the respective network node x is denoted by $S_x$.

In an exemplary embodiment according to the present disclosure, the respective $\frac{R}{a}$ receive beams of the terminal device (i.e. forming $S_{UE}$) and the respective $\frac{L}{b}$ transmit beams of the respective network node (i.e. forming $S_x$) may be randomly selected by randomly selecting their beam indexes from the receive beam set/grid Gr = {1, ..., R} and the transmit beam set/grid Gl = {1, ..., L}. Such a random selection is very easy to implement and it does not require specific knowledge about the receive beam grid and the transmit beam grid, while there is an equal chance of selection.

In another exemplary embodiment according to the present disclosure, the respective $\frac{R}{a}$ receive beams of the terminal device (i.e. forming $S_{UE}$) and the respective $\frac{L}{b}$ transmit beams of the respective network node (i.e. forming $S_x$) may be selected by (i) selecting equally spaced receive beam indexes from the receive beam set/grid Gr = {1, ..., R} (i.e. $S_{UE} = 1:\frac{R}{a}:R$ ,) and/or (ii) selecting equally spaced transmit beam indexes from the transmit beam set/grid Gl = {1, ..., L} (i.e. $S_x = 1:\frac{L}{b}:L$ ). This may have the effect that the beams of the first subset of candidate positioning beam pairs as well as the beams of the second subset of candidate positioning beam pairs are equally distributed over the receive beam grid Gr and the transmit beam Grid Gl, respectively. Moreover, if beams which are adjacent to each other in the spatial domain have subsequent indexes in receive beam set/grid Gr and the transmit beam set/grid Gl, respectively, like in 5G NR, this may have the additional effect that the beams of the first subset of candidate positioning beam pairs as well as the beams of the second subset of candidate positioning beam pairs are at least substantially equally spatially distributed.

In another exemplary embodiment according to the present disclosure, the respective $\frac{R}{a}$ receive beams of the terminal device (i.e. forming $S_{UE}$) and the respective $\frac{L}{b}$ transmit beams of the respective network node (i.e. forming $S_x$) may be selected based on at least one of (i) beam widths of the beams, or (ii) spatial diversity of the beams, or (iii) time.

For example, the respective $\frac{R}{a}$ receive beams of the terminal device (i.e. forming $S_{UE}$) and the respective $\frac{L}{b}$ transmit beams of the respective network node (i.e. forming $S_x$) may be selected such that the spatial distance (i) between any of the selected respective $\frac{R}{a}$ receive beams and (ii) between any of the selected respective $\frac{L}{b}$ transmit beams of the respective network node does not exceed a (e.g. predetermined) spatial distance threshold or is at least substantially equal (e.g. within a (e.g. predetermined) spatial distance range). This may have the effect that both (i) the beams of the first subset of candidate positioning beam pairs and (ii) the beams of the second subset of candidate positioning beam pairs are at least substantially equally spatially distributed.

Alternatively or additionally, the number of receive beams of the terminal device (i.e. forming $S_{UE}$) and the number of respective transmit beams of the respective network node (i.e. forming $S_x$) may vary over time. To this end, a and b may vary over time, i.e. a(t) and b(t); and/or $S_x$ and $S_{UE}$ may vary over time, i.e. $S_x(t)$ and $S_{UE}(t)$.

According to an exemplary embodiment, the at least one respective PRS metric is or represents at least one of:

(i) a Received Signal Strength Indicator, RSSI; or
(ii) a Reference Signal Received Power, RSRP; or
(iii) a Signal-to-Noise Ratio, SNR; or
(iv) a power of the strongest channel tap; or
(v) a Carrier-to-interference Ratio, CIR.

According to a first exemplary embodiment for estimating the PRS metrics, the at least one respective PRS metric is estimated for each candidate positioning beam pair of the second subset of candidate positioning beam pairs at least partially based on the measured PRS metrics by:

- calculating, for each candidate positioning beam pair of the second subset of candidate positioning beam pairs, a respective weighted average of the measured PRS metrics.

A weighted average of measured PRS metrics is to be understood to be a weighted arithmetic mean.

The respective weighted average of the measured PRS metrics calculated for a respective candidate positioning beam pair of the second subset of candidate positioning beam pairs may be determined or considered as respective estimated PRS metric of the respective candidate positioning beam pair.

For example, at least two or four PRS metrics measured for respective candidate positioning beam pairs of the first subset of candidate positioning beam pairs may be used for calculating the respective weighted average of measured PRS metrics.

Alternatively or additionally, for each candidate positioning beam pair of the second subset of candidate positioning beam pairs, (e.g. only) PRS metrics measured for respective candidate positioning beam pairs of the first subset of candidate positioning beam pairs representing a respective transmit beam of the same respective network node like the respective candidate positioning beam pair of the second subset of candidate positioning beam pairs may be used for calculating the respective weighted average of measured PRS metrics. This has the effect that, for estimating a PRS metric, (e.g. only) measured PRS metrics are considered which relate to the same network node.

For example, at least two PRS metrics measured for respective candidate positioning beam pairs of the first subset of candidate positioning beam pairs representing the receive beam(s) having the closest index and/or spatial distance and/or the transmit beam(s) of the same respective network node having the closest index and/or spatial distance (e.g. to the candidate positioning beam pair of the second subset of candidate positioning beam pairs for which the respective weighted average is calculated) may be used for calculating the respective weighted average of measured PRS metrics. In particular, four metrics measured for respective four neighboring candidate positioning beam pairs of the first subset of candidate positioning beam pairs may be used for calculating the respective weighted average of measured PRS metrics. The respective four neighboring candidate positioning beam pairs may comprise the following four candidate positioning beam pairs of the first subset of candidate positioning beam pairs: a first respective candidate positioning beam pair representing the receive beam having the closest lower index and a transmit beam of the same respective network node, a second respective candidate positioning beam pair representing the receive beam having the closest higher index and a transmit beam of the same respective network node, a third respective candidate positioning beam pair representing the transmit beam of the same respective network node having the closest lower index and a fourth respective candidate positioning beam pair representing the transmit beam of the same respective network node having the closest higher index. A candidate positioning beam pair of the first subset of candidate positioning beam pairs may be understood to represent a receive beam (and/or a transmit beam) having the closest index (or spatial distance), if there is not any candidate positioning beam pair of the first subset of candidate positioning beam pairs representing a receive beam (and/or transmit beam) having a closer index (or spatial distance) to the candidate positioning beam pair of the second subset of candidate positioning beam pairs for which the respective weighted average is calculated.

To give a non limiting example, for estimating a respective PRS metric for a candidate positioning beam pair (i.e. of the second subset of candidate positioning beam pairs) representing a respective receive beam r of the terminal device and a respective transmit beam l of a respective network node x (i.e. of the one or more network nodes), a respective weighted average of at least four PRS metrics measured for respective four neighboring candidate positioning beam pairs (i.e. of the first subset of candidate positioning beam pairs) comprising a first candidate positioning beam representing the receive beam having the closest lower index and a transmit beam of the same respective network node (e.g. r-1, l, x), a second respective candidate positioning beam pair representing the receive beam having the closest higher index and a transmit beam of the same respective network node (e.g. r+1, l, x), a third respective candidate positioning beam pair representing the transmit beam of the same respective network node having the closest lower index (e.g. r, 1-1, x) and a fourth respective candidate positioning beam pair representing the transmit beam of the same respective network node having the closest higher index (e.g. r, 1+1, x) is calculated.

Calculating the weighted average(s) could be performed "memoryless". To this end, for each candidate positioning beam pair of the second subset of candidate positioning beam pairs, (e.g. only) PRS metrics that were (i) most recently measured (i.e. "memoryless" approach) may be available (e.g. may be used) for calculating the respective weighted average of measured PRS metrics. The "memoryless" approach has the effect that (e.g. only) PRS metrics that were most recently measured for the first subset of candidate positioning beam pairs are available (e.g. can be used) for calculating the weighted averages to estimate the PRS metrics for the second subset of candidate positioning beam pairs. Thus, for each candidate beam pair of the first subset of candidate positioning beam pairs, only one measured respective PRS metric may for example be available (e.g. can be used) for calculating the weighted averages, i.e. for estimating the PRS metrics for the second subset of candidate positioning beam pairs. Accordingly, the "memoryless" may only require a memory (e.g. having a fixed size) for storing the most recently measured PRS metrics.

Alternatively, calculating the weighted average(s) could be performed with a "variable memory size". To this end, for each candidate positioning beam pair of the second subset of candidate positioning beam pairs, (e.g. only) PRS metrics that were measured within a measurement time window (i.e. "variable memory size" approach) may be available (e.g. can be used) for calculating the respective weighted average of measured PRS metrics. The "variable memory size" approach has the effect that all PRS metrics that were measured for the first subset of candidate positioning beam pairs within the measurement time window are available (e.g. can be used) for calculating the weighted average(s) to estimate the PRS metrics for the second subset of candidate positioning beam pairs. Thus, for each candidate beam pair of the first subset of candidate positioning beam pairs, more than one measured respective PRS metric (i.e. all respective PRS metric that were measured within the measurement time window) may be available (e.g. can be used) for calculating the weighted averages to estimate the PRS metrics for the second subset of candidate positioning beam pairs. The length of the measurement time window may be variable, for example it may be determined to be proportional to the speed of the terminal device. To give a non limiting example, the length of the measurement time window may be determined (e.g. set) to correspond to or to be less than the coherence time, i.e. -4/fD, where fD is the maximum Doppler shift. This ensures that only coherent channel measurements are used for calculating the weighted average(s) to estimate the PRS metrics for the second subset of candidate positioning beam pairs. Accordingly, the "variable memory size" approach may require a memory (e.g. having a variable size) for storing all PRS metrics that were measured within the (e.g. variable) measurement time window.

For example, at least one weight used for calculating, for at least one respective candidate positioning beam pair of the second subset of candidate positioning beam pairs, the respective weighted average of measured PRS metrics is determined at least partially based on at least one of

(i) a spatial distance between, or
(ii) beam widths of, or
(iii) antenna correlation information associated with

at least one beam represented by the respective candidate positioning beam pair of the second subset of candidate positioning beam pairs and at least one beam represented by the respective candidate positioning beam pairs of the first subset of candidate positioning beam pairs. It is to be understood that more than one (e.g. each) weight used for calculating the respective weighted average(s) may be determined accordingly.

To give a non limiting example, for calculating the respective weighted average for a respective candidate beam pair (r, l, x) (i.e. the respective candidate beam representing the receive beam r and the transmit beam l of the network node x), the respective weight w for a measured respective PRS metric measured for a respective candidate beam pair (r+n, l+k, x) may be calculated as follows: $w = \frac{1}{f(nk)}$, for example $f(n, k) = nk$ This may have the effect that, if beams which are adjacent to each other in the spatial domain have subsequent indexes in receive beam set/grid Gr and the transmit beam set/grid Gl, respectively, that the respective weights w decrease proportionally to the spatial distance between the beams so that measured PRS metrics measured for closer candidate beam pairs have an higher impact than measured PRS metrics measured for more distant candidate beam pairs. This example may be particularly useful when the "memoryless" approach as disclosed above is implemented.

Alternatively or additionally, at least one weight used for calculating, for at least one respective candidate positioning beam pair of the second subset of candidate positioning beam pairs, the respective weighted average of measured PRS metrics may be determined at least partially based on a time of measurement of at least one measured PRS metrics of the measured PRS metrics.

To give a non limiting example, for calculating the respective weighted average for a respective candidate beam pair (r, l, x) (i.e. the respective candidate beam representing the receive beam r and the transmit beam l of the network node x) at the time t, the respective weight w for a measured respective PRS metric measured for a respective candidate beam pair (r+n, l+k, x) at the time t-g may be calculated as follows: $= \frac{1}{f(n,g,k)}$, for example $f(n, g, k) = ngk$ or $f(n, g, k) = nk$. This may have the effect that, if beams which are adjacent to each other in the spatial domain have subsequent indexes in receive beam set/grid Gr and the transmit beam set/grid Gl, respectively, that the respective weights w decrease proportionally to the spatial distance between the beams and the time lapsed since the measurement so that measured PRS metrics measured more recently or for closer candidate beam pairs have an higher impact than measured PRS metrics measured less recently or for more distant candidate beam pairs. This example may be particularly useful when the "variable memory size" approach as disclosed above is implemented.

It is however to be understood that the present disclosure is not limited to these exemplary implementations for determining the weights. In alternative exemplary implementations, the weights could be determined for the "memoryless" approach as follows:

1. For network node x of the one or more network nodes:
2. Select a first subset of measured PRS metrics mS1 and a second subset of measured PRS metrics mS2
3. Define the relation: $\widehat{mS1}(r,l,x) = \sum_{r'\neq r,l'\neq l}^{R,L} w(r',l') * mS2(r',l',x)$.
4. Calculate weights $\hat{w}(r',l',x) = \arg\min\left(\left|mS1 - \widehat{mS1}\right|^2\right)$.
5. Calculate model error $E = ||mS1 - \Sigma_{r'\neq r,l'\neq l} \hat{w}(r',l',x) * mS2(r',l',x)||^2$. (Other error metrics may be used as well.)
6. If calculated model error E is greater than a predetermined error threshold, return to step 2 and select different sets (e.g. sets having different sizes).

Else, use weights calculated in step 4 for calculating the weighted average for a respective candidate beam pair representing a transit beam of the network node x. For example, the measured PRS metrics used for calculating the weighted average may be (e.g. at least partially) equal to or (e.g. at least partially) different from the measured PRSs metrics of both the first subset of measured PRS metrics mS1 and the second subset of measured PRS metrics mS2. Moreover, return to step 2 and select different network node of the one or more network nodes as network node x until all network nodes of the one or more network nodes have been considered. and for the "variable memory size" approach as follows:

1. For network node x of the one or more network nodes:
2. Select a first subset of measured PRS metrics mS1 and a second subset of measured PRS metrics mS2.
3. Define the relation: $\widehat{mS1}(r,l,x,t) = \sum_{r'\neq r,l'\neq l,t'<t}^{R,L} w(r',l',t') * mS2(r',l',x,t)$.
4. Calculate weights $\hat{w}(r',l',x,t') = \arg\min\left(\left|mS1 - \widehat{mS1}\right|^2\right)$.
5. Calculate model error $E = ||mS1 - \Sigma_{r'\neq r,l'\neq l,t'<t} \hat{w}(r',l',t') * mS2(r',l',x,t)||^2$. (Other error metrics may be used as well.)
6. If calculated model error E is greater than a predetermined error threshold, return to step 2 and select different sets (e.g. sets having different sizes).

Else, use weights calculated in step 4 for calculating the weighted average for a respective candidate beam pair representing a transit beam of the network node x. For example, the measured PRS metrics used for calculating the weighted average may be (e.g. at least partially) equal to or (e.g. at least partially) different from the measured PRSs metrics of both the first subset of measured PRS metrics mS1 and the second subset of measured PRS metrics mS2. Moreover, and return to step 2 and select different network node of the one or more network nodes as network node x until all network nodes of the one or more network nodes have been considered.

These alternative exemplary implementation enable to determine the weights on the fly.

According to a second exemplary embodiment for estimating the PRS metrics, the at least one respective PRS metric is estimated for each candidate positioning beam pair of the second subset of candidate positioning beam pairs at least partially based on the measured PRS metrics by using a machine learning algorithm. In particular, the at least one respective PRS metric may be estimated for each candidate positioning beam pair of the second subset of candidate positioning beam pairs at least partially based on the measured PRS metrics by:

- generating, for each network node of the one or more network nodes, a respective measured positioning reference signal metric matrix;
- receiving, by the machine learning algorithm, the generated positioning reference signal metric matrix/matrices as input;
- estimating, by the machine learning algorithm, missing matrix elements of the positioning reference signal metric matrix/matrices received as input;
- providing, by the machine learning algorithm, a respective densified positioning reference signal matrix matrix/matrices as output for each positioning reference signal metric matrix received as input.

For example, the machine learning algorithm receives one or more PRS metric matrices as input, wherein the one or more PRS metric matrices comprise(s) the measured PRS metrics as matrix elements. Each of the PRS metric matrices may for example (e.g. only) comprise respective PRS metrics measured for respective candidate positioning beam pairs of the first subset of candidate positioning beam pairs representing a respective transmit beam of the same respective network node. In the one or more PRS metric matrices, the measured PRS metrics may for example be positioned at least partially based on spatial distances between beams represented by the candidate positioning beam pairs of the first subset of candidate positioning beam pairs.

In particular, for each network node x of the one or more network nodes, a respective PRS metric matrix $M_x \in \mathbb{R}^{R \times L}$ may be generated based on the measured PRS metrics measured for candidate positioning beam pairs representing a transmit beam of the network node x as follows:

$$M_x(r,l) = \begin{cases} mPRSmetric(r,l,x), & r \in S_{UE}, l \in S_x \\ -\infty, otherwise \end{cases}, \qquad x = 1:X \quad (1)$$

where mPRSmetric($r, l, x$) denotes the measured PRS metric measured for candidate positioning beam pair (r, l, x) (i.e. representing a receive beam r of the terminal device and a transmit beam l of the network node x), and X denotes the number of the one or more network nodes. This may have the effect that, if beams which are adjacent to each other in the spatial domain have subsequent indexes in receive beam set/grid Gr and the transmit beam set/grid Gl, respectively, measured PRS metrics measured for closer candidate beam pairs are positioned closer to each other in the input matrix than measured PRS metrics measured for more distant candidate beam pairs.

The PRS metric matrices may be time stamped, for example each of the X PRS metric matrices $M_x$ may be time stamped (e.g. $M_x(t)$, x = 1: X, t is the time stamp).

Optionally, each time stamped PRS metric matrix may be associated with a respective terminal device specific orientation matrix A(t) which could be obtained from or determined based on one or more sensors (e.g. gyroscope) of the terminal device. For example, the machine learning algorithm may additionally receive, for each time stamped PRS metric matrix, the associated respective terminal device specific orientation matrix $A_x(t)$, x = 1: X, t is the time stamp). This may enable (e.g. the machine learning algorithm) to adapt PRS metric matrices $M_x(t1)$ and $M_x(t2)$ which comprise PRS metrics measured with different terminal device orientations at different measurement times t1 and t2. Accordingly, this may be particularly useful in exemplary implementations where the machine learning algorithm receives at least two PRS metric matrices $M_x(t1)$ and $M_x(t2)$ (e.g. at least two respective PRS metric matrices for each network node of the one or more network nodes) having different time stamps t1 and t2 as input. In exemplary implementations where the machine learning algorithm does only receive one PRS metric matrix $M_x$ or $M_x(t)$ (e.g. only one respective PRS metric matrix for each network node of the one or more network nodes), it may be assumed that the PRS metrics comprised by the PRS metric matrix $M_x$ or $M_x(t)$ were measured with the same terminal device orientation at the same measurement time so that no adaption is necessary.

In exemplary implementations where the machine learning algorithm receives PRS metric matrices and associated terminal device specific orientation matrices, the input features may be organized in two channels, i.e. a first channel for receiving the PRS metric matrices (e.g. $M_x(t)$, $x$ = 1: $X$) and a second channel for receiving the associated terminal device specific orientation matrices (e.g. $A_x(t)$, $x$ = 1: $X$).

In exemplary implementations where the machine learning algorithm receives (e.g. only receives) PRS metric matrices, the input features may be organized in one channel, i.e. a first channel for receiving the PRS metric matrices (e.g. $M_x(t)$, $x$ = 1: $X$), for example a second channel for receiving associated terminal device specific orientation matrices may be inactivated or omitted in these exemplary implementations.

The PRS metric matrices (and optionally the associated terminal device specific orientation matrices) may be used as input to a machine learning algorithm (e.g. a supervised machine learning algorithm) that performs interpolation and/or extrapolation to estimate the missing matrix elements (e.g. the matrix elements having the value -∞) corresponding to the PRS metrics which are to be estimated for the second subset of candidate beam pairs. In particular, the machine learning algorithm may be implemented as a multiple-input and multiple-output machine learning algorithm.

For example, the machine learning algorithm provides, for each PRS metric matrix received as input, a respective densified PRS metric matrix as output. For example, the respective densified PRS metric matrix comprises estimated PRS metrics at the positions of the missing matrix elements (e.g. the matrix elements having the value -∞) of the respective PRS metric matrix. The estminated PRS metrics may be obtained as a result of an interpolation and/or extrapolation performed by the machine learning algorithm. Considering the exemplary case that the machine learning algorithm receives X PRS metric matrices $M_x(t)$, $x$ = 1: $X$, the machine learning algorithm may output X densified PRS metric matrices $O_x(t)$, $x$ = 1: $X$, where all matrix elements having the value -∞ (i.e. the missing matrix elements) are replaced with an estimated PRS metric.

For example, the machine learning algorithm is implemented as one of:

(i) a deep neural network (DNN), or
(ii) a convolutional neural network (CNN), or
(iii) a generative adversial network (GAN), or
(iv) a long-short term memory (LSTM), or
(v) a time delay neural network (TDNN).

In an exemplary DNN implementation, the PRS metric matrices received as input may be processed in parallel to estimate the PRS metrics at the position of the missing matrix elements (e.g. the matrix elements having the value -∞) of the PRS metric matrices. Accordingly, each network node of the one or more network nodes may be treated independently and no information may be shared between these different processing channels. In an exemplary CNN implementation, the PRS metric matrices received as input may be processed jointly to estimate the PRS metrics at the position of the missing matrix elements (e.g. the matrix elements having the value -∞) of the PRS metric matrices. For example, the CNN will learn to exploit the distance between any pair of network nodes or their degree of collinearity with the terminal device.

The exemplary DNN and CNN implementations are examples of implementations where the machine learning algorithm does (e.g. only) receive one respective PRS metric matrix $M_x$ or $M_x(t)$ for each network node x of the one or more network nodes (x = 1:X). They may employ a Rectified Linear Unit (ReLu) output activation function or a Swish output activation function.

The exemplary CNN and DNN implementations take advantage of an inherent spatial correlation of the wireless channel, i.e. that the PRS metrics of two adjacent beams are correlated.

In an exemplary LSTM or TDNN implementation, the LSTM or TDNN receives, for each network node x of the one or more network nodes (x = 1:X), a respective set of at least two PRS metric matrices $M_x(t1)$ and $M_x(t2)$ and respective associated terminal device specific orientation matrices $A_x(t1)$ and $A_x(t2)$ as input, wherein all PRS metric matrices having a time stamp within a measurement time window are part of the respective set. The length of the measurement time window may be variable, for example it may be determined to be proportional to the speed of the terminal device. To give a non limiting example, the length of the measurement time window may be determined (e.g. set) to correspond to or to be less than the coherence time, i.e. -4/fD, where fD is the maximum Doppler shift. In this way, the past measurements as well as the most recently measured PRS metrics as represented by the PRS metric matrices received as input are exploited to estimate the missing matrix elements (e.g. the matrix elements having the value -∞) of the PRS metric matrices received as input which represent the most recently measured PRS metrics.

To train the machine learning algorithm a cost function (e.g. the MSE) between the real PRS metrics and the estimated PRS metrics may be used. Other cost functions are also applicable. The machine learning algorithm may be trained in a lab, via simulations, Ray-tracing tools, or collecting measurements from designated terminal devices in the field. A combination of the above is also possible. Specifically, the training phase (e.g. of the exemplary DNN, CNN, LSTM or TDNN implementation as disclosed above) may comprise generating a training data sample for X network nodes as follows:

1. Generate channel frequency responses for a terminal device moving with a velocity vector v with magnitude drawn from the uniform distribution [0, $V_M$], e.g. $V_M = 500\frac{km}{h}$ , and operating at a carrier frequency $f_c$ drawn from the uniform distribution [fm, fM], e.g. fm = 450 MHz, fM = 39 GHz. Channels should be generated with a LOS probability drawn from a uniform distribution in [0, 1].

    a. A channel generator (e.g. a QuaDRiGa channel generator which is fully 3GPP compliant) may for example be used for this purpose.
    b. If a lab setup is used, the terminal device may also be rotated around its own y-axis (and potentially x-axis) with a resolution of dg, e.g. dg = π/20 rad.

2. Apply Additive white Gaussian noise (AWGN) on the results obtained in step 1, with noise variance drawn from the uniform distribution [n1, n2], e.g. n1 = -10 dB, n2 = 10 dB.
3. Generate, for each network node x of the X network nodes, a respective full PRS metric matrix $O_x(t)$ which comprises R*L PRS metrics via exhaustive beam sweeping measurements of the channels generated in step 1, at the terminal device (e.g. simulated or emulated).
4. Puncture each full PRS metric matrix $O_x(t)$ by (e.g. randomly) removing matrix elements (e.g. randomly removing R-R/a rows and L-L/b columns) such that the respective PRS metric matrix $M_x(t)$ is obtained which is to be used as input for the machine learning algorithm.
5. Timestamp the data point 1-3 and collect in a table like:

| Timestamp t | speed | Noise power | $f_c$ | Input $M_x$ | Output $O_x$ |
|---|---|---|---|---|---|
| | | | | | |

6. Provide the PRS metric matrices $M_x(t)$ (x=1:X) obtained in step 5 as input to the machine learning algorithm, record the densified PRS metric matrices $\widehat{O}_x$ (x=1:X) received as output from the machine learning algorithm and calculate the cost function, e.g. $C(O_x, \widehat{O}_x) = MSE(O_x, \widehat{O}_x)$ . Backpropagate cost until convergence.

It is to be understood that the training may happen in the lab and the fixed machine learning algorithm obtained as a result of the training may be deployed in production at the terminal device. Alternatively or additionally, when the terminal device operates in the field, the machine learning algorithm may be retrained, for example by:

- Periodic collection of exhaustive beam sweeping measurements of PRS metrics. These measurements may be stored locally, and training may be performed locally. Alternatively, these measurements could be forwarded to a remote entity (like a server or server cloud), where the machine learning algorithm is retrained and subsequently provided to the terminal device.
- On-demand collection of exhaustive beam sweeping measurements. When the new exhaustive beam sweeping measurements is of specific size, the machine learning algorithm is retrained (e.g. locally or remotely as disclosed above).

It is to be understood that the presentation of the embodiments disclosed herein is merely by way of examples and non-limiting.
Herein, the disclosure of a method step shall also be considered as a disclosure of means configured for performing the respective method step. Likewise, the disclosure of means configured for performing a method step shall also be considered as a disclosure of the respective method step itself.
Other features of the present disclosure will become apparent from the following detailed description considered in conjunction with the accompanying drawings. It is to be understood, however, that the drawings are designed solely for purposes of illustration and not as a definition of the limits of the present disclosure, for which reference should be made to the appended claims. It should be further understood that the drawings are not drawn to scale and that they are merely intended to conceptually illustrate the structures and procedures described herein.

BRIEF DESCRIPTION OF THE FIGURES

Some example embodiments will now be described with reference to the accompanying drawings.

Fig. 1     is a block diagram of an exemplary embodiment of a terminal device according to the present disclosure;

Fig. 2     is a block diagram of an exemplary embodiment of a network node according to the present disclosure;

Fig. 3     is a schematic illustration of an exemplary embodiment of a system according to the present disclosure;

Fig. 4     is a flow chart illustrating an exemplary embodiment of a method according to the present disclosure;

Fig. 5     is a flow chart illustrating an exemplary embodiment of determining the first subset of candidate positioning beam pairs according to the present disclosure;

Fig. 6     is a flow chart illustrating an exemplary embodiment of estimating PRS metrics according to the present disclosure;

Fig. 7     is a flow chart illustrating a exemplary embodiment of determining weights according to the present disclosure;

Fig. 8     is a flow chart illustrating another exemplary embodiment of estimating PRS metrics;

Fig. 9     is a schematic illustration of an PRS metric matrix received as input by a machine learning algorithm according to the present disclosure;

Fig. 10    is a schematic illustration of an PRS metric matrix provided as output by a machine learning algorithm according to the present disclosure; and

Fig. 11    is a schematic illustration of examples of tangible and non-transitory computer-readable storage media.

## DETAILED DESCRIPTION OF THE FIGURES

The following description serves to deepen the understanding of the present disclosure and shall be understood to complement and be read together with the description of example embodiments of the present disclosure as provided in the above summary section of this specification.

While the specific radio system in the examples below is 5G, this is only to be considered a non-limiting example.

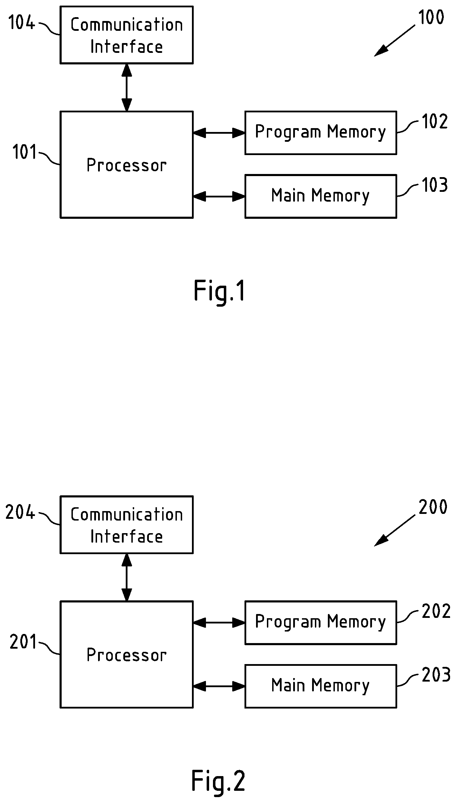

Fig. 1 shows a block diagram of an exemplary embodiment of a terminal device in form of user equipment (UE) 100 according to the present disclosure. For example, UE 100 may be one of a smartphone, a tablet computer, a notebook computer, a smart watch, a smart band, an IoT device or a vehicle.

UE 100 comprises a processor 101. Processor 101 may represent a single processor or two or more processors, which are for example at least partially coupled, for example via a bus. Processor 101 executes a program code stored in program memory 102 (for example program code causing UE 100 to perform one or more of the embodiments of a method according to the present disclosure or parts thereof, when executed on processor 101), and interfaces with a main memory 103. Program memory 102 may also contain an operating system for processor 101. Some or all of memories 102 and 103 may also be included into processor 101.

One of or both of a main memory and a program memory of a processor (e.g. program memory 102 and main memory 103) could be fixedly connected to the processor (e.g. processor 101) or at least partially removable from the processor, for example in the form of a memory card or stick.

A program memory (e.g. program memory 102) may for example be a non-volatile memory. It may for example be a FLASH memory (or a part thereof), any of a ROM, PROM, EPROM, MRAM or a FeRAM (or a part thereof) or a hard disc (or a part thereof), to name but a few examples. For example, a program memory may for example comprise a first memory section that is fixedly installed, and a second memory section that is removable from, for example in the form of a removable SD memory card.

A main memory (e.g. main memory 103) may for example be a volatile memory. It may for example be a DRAM memory, to give non-limiting example. It may for example be used as a working memory for processor 101 when executing an operating system, an application, a program, and/or the like.

Processor 101 further controls a communication interface 104 (e.g. radio interface) configured to receive and/or transmit data and/or information. In particular, communication interface 104 is configured to receive radio signals like PRS from a network node, such as a base station (e.g. network node 200 depicted in Fig. 2), by use of more than one receive beam. Moreover, communication interface 104 may be configured to transmit radio signals to a network node, such as a base station, by use of more than one transmit beam. To this end, communication interface 104 may comprise at least one or multiple antennas, for example an antenna array. It is to be understood that any computer program code based processing required for receiving and/or measuring (e.g. evaluating) radio signals may be stored in an own memory of communication interface 104 and executed by an own processor of communication interface 104 and/or it may be stored for example in memory 103 and executed for example by processor 101.

Communication interface 104 may in particular be configured to communicate according to a cellular communication system like a 2G/3G/4G/5G NR or future generation cellular communication system. UE 100 may use radio interface 104 to communicate with a base station (e.g. network node 200 depicted in Fig. 2). The 2G/3G/4G/5G NR specifications are developed by and retrievable from the third generation partnership project (3GPP, https://www.3gpp.org/).

For example, the communication interface 104 may further comprise a Bluetooth Low Energy (BLE) and/or Bluetooth radio interface including a BLE and/or Bluetooth transmitter, receiver or transceiver.

The Bluetooth specifications are developed by the Bluetooth Special Interest Group and are presently available under https://www.bluetooth.com/. For example, radio interface 104 may additionally or alternatively comprise a Wireless Local Area Network (WLAN) radio interface including at least a WLAN transmitter, receiver or transceiver. WLAN is for example specified by the standards of the IEEE 802.11 family (http://www.ieee.org/).

The components 102 to 104 of UE 100 may for example be connected with processor 101 by means of one or more serial and/or parallel busses.

It is to be understood that UE 100 may comprise various other components. For example, UE 100 may optionally comprise a user interface (e.g. a touch-sensitive display, a keyboard, a touchpad, a display, etc.).

Fig. 2 is a block diagram of an exemplary embodiment of a network node, such as base station (BS) (e.g. a next generation NodeB (gNB) of a 5G NR communication network, or an evolved NodeB (eNodeB) of a LTE communication network, BS, or the like).

Network node 200 comprises a processor 201. Processor 201 may represent a single processor or two or more processors, which are for example at least partially coupled, for example via a bus. Processor 201 executes a program code stored in program memory 202 (for example program code causing network node 200 to perform alone or together with UE 100 embodiments according to the present disclosure or parts thereof), and interfaces with a main memory 203.

Program memory 202 may also comprise an operating system for processor 201. Some or all of memories 202 and 203 may also be included into processor 201.

Moreover, processor 201 controls a communication interface 204 configured to receive and/or transmit data and/or information. In particular, communication interface 204 is configured to transmit radio signals like PRS by use of more than one transmit beam. Moreover, communication interface 104 may be configured to receive radio signals from a terminal device (e.g. UE 100 depicted in Fig. 1) by use of more than one receive beam. To this end, communication interface 204 may comprise at least one or multiple antennas, for example an antenna array.

Communication interface 204 may in particular be configured to communicate according to a cellular communication system like a 2G/3G/4G/5G NR or future generation cellular communication system. Network node 200 may use radio interface 204 to communicate with a terminal device (e.g. UE 100 depicted in Fig. 1).

The components 202 to 204 of network node 200 may for example be connected with processor 201 by means of one or more serial and/or parallel busses.

It is to be understood that network node 200 may comprise various other components.

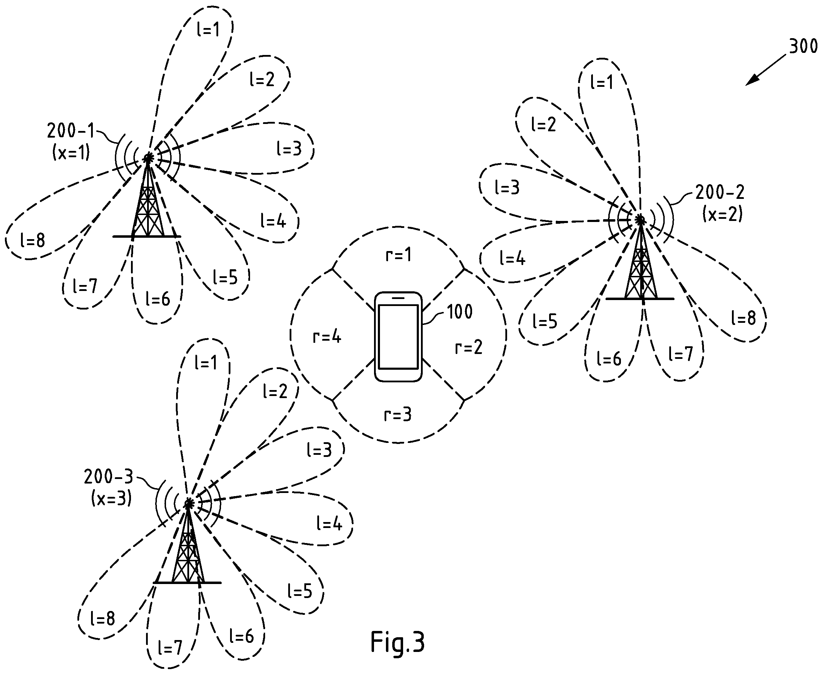

Fig. 3 is a schematic illustration of an exemplary embodiment of a system 300 according to the present disclosure.

System 300 comprises UE 100 and three (i.e. X=3) network nodes 200-1 (denoted by index x=1), 200-2 (denoted by index x=2) and 200-3 (denoted by index x = 3). UE 100 of Fig. 3 may be considered to correspond to UE 100 of Fig. 1, and each of network nodes 200-1 to 200-3 may be considered to correspond to network node 200 of fig. 2. System 300 may be a communication system like a 2G/3G/4G/5G NR or future generation cellular communication system.

As shown in Fig. 3, each of network nodes 200-1 to 200-3 supports eight (i.e. L = 8) transmit beams for transmitting PRSs which are denoted by the respective transmit beam index l = 1, 2, 3, 4, 5, 6, 7 or 8 and UE 100 supports four (R = 4) receive beams for receiving PRSs which are denoted by the respective receive beam index r = 1, 2, 3 or 4. According to this example embodiment, receive beams and transmit beams which are adjacent to each other in the spatial domain have subsequent indexes in receive beam set/grid Gr and the transmit beam set/grid Gl, respectively.

Each combination of a respective receive beam of UE 100 and a respective transmit beam of a respective network node of network nodes 200-1 and 200-3 is to be understood to be represented by (e.g. to form or define) a candidate positioning beam pair. For each network node of the network nodes 200-1 to 200-3, there are thus R*L = 32 respective candidate beam pairs representing all available combinations of receive beams of UE 100 and the respective network node of the network nodes 200-1 to 200-3. In total there are thus X*R*L = 96 candidate positioning beam pairs representing all available combinations of receive beams of UE 100 and transmit beams of the network nodes 200-1 to 200-3. These 96 candidate positioning beams pairs may thus be understood to be a plurality of candidate positioning beam pairs representing all available combinations of receive beams of the terminal device and transmit beams of the one or more network nodes.

It is to be understood that the present disclosure is not limited to the system according to the exemplary embodiment of Fig. 3. In particular, a system according to the present disclosure may comprise further UEs and/or network nodes, for example supporting a different number of receive beams (e.g. more than 4 receive beams, e.g. 8 receive beams) and a different number of transmit beams (e.g. more than 4 transmit beams, e.g. 8, 16 or 32 transmit beams), respectively. A system according to the present disclosure may comprise at least one UE and at least one network node.

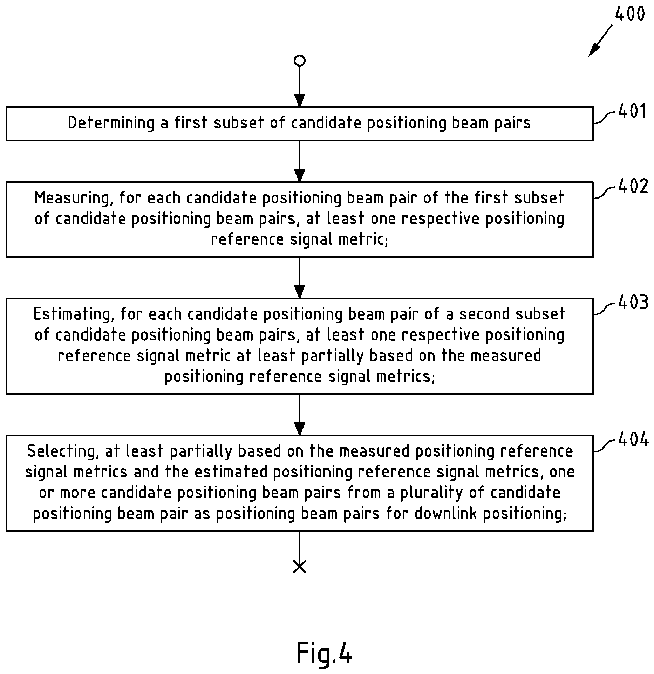

Considering system 300, UE 100 and each network node of network nodes 200-1 to 200-3 could perform an exhaustive beam sweeping to determine the respective positioning beam pair which is to be used for downlink positioning. According to this example, this however means that UE 100 may receive and measure 96 PRS to determine the positioning beam pairs which are to be used for downlink positioning. Such an exhaustive beam sweeping may result in a high latency and may be inefficient if for example about 3% of these PRS (i.e. 3 out of 96, i.e. one per network node) are of interest for downlink positioning. Fig. 4 is a flow chart 400 illustrating an exemplary embodiment of a method according to the present disclosure. The method may serve for beam selection for downlink positioning without performing an exhaustive beam sweeping. Without limiting the scope of the present disclosure, it is assumed in the following that UE 100 which is part of system 300 as depicted in Fig. 3 performs the actions of flow chart 400.

In optional action 401, UE 100 determines a first subset of candidate positioning beam pairs. The first subset of candidate positioning beam pairs is a subset of the plurality of candidate positioning beam pairs. In particular, the first subset of candidate positioning beam pairs may be a subset of the example of 96 candidate positioning beam pairs representing all available combinations of receive beams of UE 100 and transmit beams of the network nodes 200-1 to 200-3.

The UE 100 may thus determine the first subset of candidate positioning beam pairs by selecting the first subset of candidate positioning beam pairs from the plurality of candidate positioning beam pairs, i.e the 96 candidate beam pairs representing all available combinations of receive beams of UE 100 and transmit beams of the network nodes 200-1 to 200-3. To this end, UE 100 may receive assistance information from a serving network node (e.g. network node 200-1) representing the plurality of candidate positioning beam pairs or enabling UE 100 to determine the plurality of candidate positioning beam pairs.

Action 401 is only optional. Alternatively, UE 100 may for example receive positioning assistance information from serving network node (e.g. network node 200-1) representing the first subset of candidate positioning beam pairs.

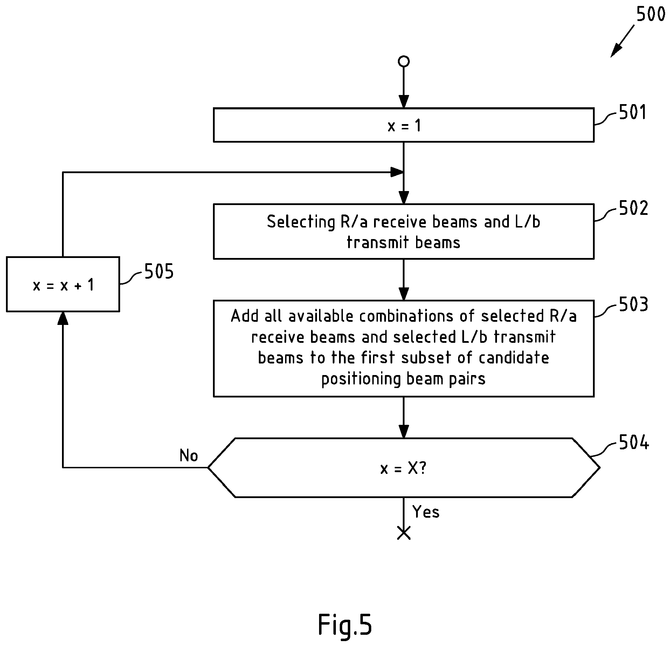

An exemplary embodiment of action 401 is flow chart 500 of Fig. 5 as described below in more detail.

In action 402, UE 100 measures, for each candidate positioning beam pair of the first subset of candidate positioning beam pairs, at least one respective PRS metric.

As disclosed above, a respective PRS metric measured for a respective candidate positioning beam pair may be understood to be a metric which qualitatively or quantitatively indicates a perceived reception quality of the corresponding PRS transmitted and received by use of the respective combination of transmit beam and receive beam represented by this respective candidate positioning beam pair. Accordingly, measuring a respective PRS metric for a respective candidate positioning beam pair may be understood to mean determining the respective PRS metric based on a respective PRS received by UE 100 such that the measured respective PRS metric qualitatively or quantitatively indicates a perceived reception quality of the respective PRS. In other words, each PRS metric measured in action 402 may indicate a respective reception quality that was perceived by UE 100 when it received the respective PRS.

Without limiting the present disclosure, it is assumed in the following that UE 100 measures, for each candidate positioning beam pair of the first subset of candidate positioning beam pairs, a respective Reference Signal Received Power (RSRP) in action 402. The RSRP measured for a respective candidate positioning beam pair representing the respective receive beam r of UE 100 and the respective transmit beam l of network node x of network nodes 200-1 to 200-3 at measurement time t is denoted by mRSRP (r, l, x) or mRSRP (r, l, x, t) in the following.

In action 403, UE 100 estimates, for each candidate positioning beam pair of a second subset of candidate positioning beam pairs, at least one respective positioning reference signal metric at least partially based on the measured positioning reference signal metrics.

The second subset of candidate positioning beam pairs comprises one or more candidate positioning beam pairs of the plurality of candidate positioning beam pairs (i.e. the 96 candidate positioning beam pairs representing all available combinations of receive beams of UE 100 and transmit beams of the network nodes 200-1 to 200-3) that is/are not part of the first subset of candidate positioning beam pairs. In the following, it is assumed that the first subset of candidate positioning beam pairs and the second subset of candidate positioning beam pairs are complements and that the union of the first subset of candidate positioning beam pairs and the second subset of candidate positioning beam pairs equals the plurality of candidate positioning beam pairs. In other words, the second subset of candidate positioning beam pairs comprises all candidate positioning beam pairs of the plurality of candidate positioning beam pairs (i.e. the 96 candidate positioning beam pairs representing all available combinations of receive beams of UE 100 and transmit beams of the network nodes 200-1 to 200-3) that are not part of the first subset of candidate positioning beam pairs.

As disclosed above, a respective PRS metric estimated for a respective candidate positioning beam pair may be understood to be a metric which qualitatively or quantitatively indicates an expected reception quality of the corresponding PRS transmitted and received by use of the respective combination of transmit beam and receive beam represented by this respective candidate positioning beam pair. Accordingly, estimating a respective PRS metric for a respective candidate positioning beam pair may be understood to mean determining the respective PRS metric based on PRS metrics measured for other candidate positioning beam pairs such that the estimated respective PRS metric qualitatively or quantitatively indicates an expected reception quality of the respective PRS. In other words, each PRS metric estimated in action 403 may indicate a respective reception quality that is expected to be perceived by UE 100 when it receives the respective PRS.

Without limiting the present disclosure, it is assumed in the following that UE 100 estimates, for each candidate positioning beam pair of the second subset of candidate positioning beam pairs, a respective Reference Signal Received Power (RSRP) in action 403. The RSRP estimated for a respective candidate positioning beam pair representing the respective receive beam r of UE 100 and the respective transmit beam l of network node x of network nodes 200-1 to 200-3 at time t is denoted by eRSRP (r, l, x) or eRSRP (r, l, x, t) in the following.

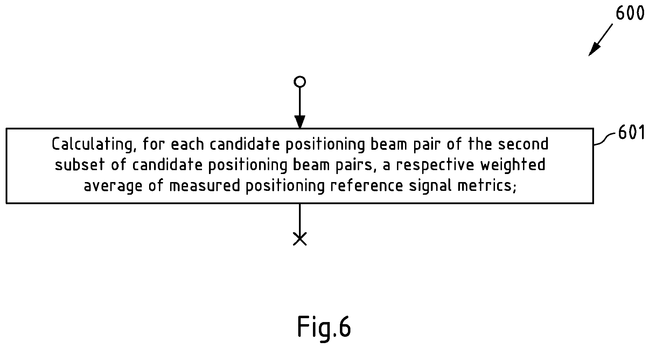

Exemplary embodiments of action 403 are flow charts 600 to XXX of Figs. 6 to X as described below in more detail.

In action 404, UE 100 selects, at least partially based on the measured positioning reference signal metrics and the estimated positioning reference signal metrics, one or more candidate positioning beam pairs from a plurality of candidate positioning beam pairs as positioning beam pairs for downlink positioning.

A positioning beam pair for downlink positioning may be understood to represent a combination of a transmit beam and a receive beam that is to be used for transmitting and receiving a PRS for downlink positioning.

As disclosed above, selecting, at least partially based on the measured PRS metrics and the estimated PRS metrics, one or more candidate positioning beam pairs from the plurality of candidate positioning beam pairs as positioning beam pairs for downlink positioning may be understood to mean that, for each network node of the one or more network nodes, one respective candidate positioning beam pair from the plurality of candidate positioning beam pairs is selected as respective positioning beam pair for downlink positioning. For example, for each network node of the one or more network nodes, the respective candidate positioning beam pair from the plurality of candidate positioning beam pairs for which the PRS metric indicating the best reception quality of a PRS transmitted by the respective network node is estimated or measured.

In particular, UE 100 may select, for each network node x of the network nodes 200-1 to 200-3, the one respective candidate positioning beam pair (r, l, x) from the plurality of candidate positioning beam pairs representing receive beam r and transmit beam l of network node x for which the maximum RSRP has been measured in action 402 and estimated in action 403, respectively (e.g. positioning beam pair (r, l, x) = argmax. (mRSPR, eRSRP)).

Fig. 5 is a flow chart 500 illustrating an exemplary embodiment of action 401 of flow chart 400 of Fig. 4 relating to determining the first subset of candidate positioning beam pairs by UE 100.

Actions of flow chart 500 are performed iteratively for each network node of network nodes 200-1 to 200-3.

In action 501, x is set to 1 such that actions 502 and 503 of the first iteration are performed for network node x=1, i.e. network node 200-1.

In action 502, $\frac{R}{a}$ receive beams of UE 100 and $\frac{L}{b}$ transmit beams of the respective network node x (i.e. network node 200-1 in the first iteration) are selected, where R is the total number of receive beams of UE 100 and L is the total number of transmit beams of the respective network node x. The selected $\frac{R}{a}$ receive beams of UE 100 form the set $S_{UE}$; and the selected $\frac{L}{b}$ transmit beams of the respective network node x form the set $S_x$.

Parameters a and b may be predetermined or selected as a tradeoff between accuracy and latency. Selecting a = 1 and b = 1 results in an exhaustive beam sweeping as known from the prior art such that parameters a and b are greater than 1 according to the present disclosure, for example a = 2 or a = 4, b = 4 or b = 8. For example, UE 100 may for example receive positioning assistance information from the serving network node (e.g. network node 200-1) representing parameters a and b.

As disclosed above in more detail, the $\frac{R}{a}$ receive beams of UE 100 (i.e. forming $S_{UE}$) and the respective $\frac{L}{b}$ transmit beams of the respective network node (i.e. forming $S_x$) may be selected by at least one of:

(i) by randomly selecting their beam indexes from the receive beam set/grid Gr = {1, ..., R} and the transmit beam set/grid Gl = {1, ..., L}; and/or

(ii) by selecting equally spaced receive beam indexes from the receive beam set/grid Gr = {1, ..., R} (i.e. $S_{UE} = 1 : \frac{R}{a} : R$ ,) and/or selecting equally spaced transmit beam indexes from the transmit beam set/grid Gl = {1,..., L} (i.e. $S_x = 1 : \frac{L}{b} : L$ ); and/or

(iii) based on spatial distances between beams such that the spatial distance (i) between any of the selected $\frac{R}{a}$ receive beams and between any of the selected $\frac{L}{b}$ transmit beams does not exceed a (e.g. predetermined) spatial distance threshold or is at least substantially equal (e.g. within a (e.g. predetermined) spatial distance range).

It is to be understood that the present disclosure is not limited to these selection schemes.

In action 503, all available combinations of the $\frac{R}{a}$ receive beams of UE 100 (i.e. forming $S_{UE}$) and the respective $\frac{L}{b}$ transmit beams of the respective network node (i.e. forming $S_x$) as selected in action 502 added as candidate positioning beam pairs to the first subset of candidate positioning beam pairs.

In action 504, it is checked whether x is equal to X (i.e. X = 3). If x is equal to x, this means that actions 502 and 503 have been performed for each network node of network nodes 200-1 to 200-3 and flow chart 500 is terminated. Otherwise, x is incremented by one (action 505) and actions 502 and 503 of the next iteration are performed for the next network node, for example actions 502 and 503 of the second iteration are performed for network node 200-2 (i.e. x=2).

Fig. 6 is a flow chart 600 illustrating an exemplary embodiment of action 403 of flow chart 400 of Fig. 4 relating to estimating the PRS metrics.

In action 601, UE 100 calculates a respective weighted average of measured PRS metrics calculating for each candidate positioning beam pair of the second subset of candidate positioning beam pairs.

As disclosed above, it is assumed that UE 100 measures, for each candidate positioning beam pair of the first subset of candidate positioning beam pairs, a respective Reference Signal Received Power (RSRP) in action 402. In the following, it is thus assumed that a respective weighted average of mRSRPs is calculated for each candidate positioning beam pair of the second subset of candidate positioning beam pairs in action 601.

The respective weighted average of mRSRPs calculated for a respective candidate positioning beam pair of the second subset of candidate positioning beam pairs may be determined or considered as respective estimated RSRP of the respective candidate positioning beam pair. The RSRP estimated for a respective candidate positioning beam pair representing the respective receive beam r of UE 100 and the respective transmit beam l of network node x of network nodes 200-1 to 200-3 at measurement time t is denoted by eRSRP (r, l, x) or eRSRP (r, l, x, t) in the following.

As disclosed above, the weighted average(s) could be calculated "memoryless". To estimate eRSRP (r, l, x, t), only mRSRPs that were most recently measured in action 402 (i.e. measured at measurement t) are for example used for calculating the respective weighted average according to the "memoryless" approach.

Considering the "memoryless" approach, four mRSRPs measured for respective four neighboring candidate positioning beams of the first subset of candidate positioning beam pairs at measurement time t could for example be used for calculating the respective weighted average of mRSRPs for a respective candidate positioning beam pair of the second subset of candidate positioning beam pairs. The respective four neighboring candidate positioning beams of the respective candidate positioning beam pair of the second subset of candidate positioning beam pairs representing a respective receive beam r of the terminal device and a respective transmit beam l of a respective network node x of network nodes 200-1 to 200-3 comprises a first candidate positioning beam representing the receive beam having the closest lower index and a transmit beam of network node x (e.g. r-n, l, x), a second respective candidate positioning beam pair representing the receive beam having the closest higher index and a transmit beam of the same respective network node (e.g. r+m, l, x), a third respective candidate positioning beam pair representing the transmit beam of the same respective network node having the closest lower index (e.g. r, 1-i, x) and a fourth respective candidate positioning beam pair representing the transmit beam of the same respective network node having the closest higher index (e.g. r, l+j, x). In the following, it is thus assumed that mRSRP(r-n, l, x, t), mRSRP(r+m, l, x, t), mRSRP(r, 1-i, x, t) and mRSRP(r, l+j, x,t) are used for calculating the weighted average to estimate eRSRP(r, l, x, t) according to the memoryless approach.

As disclosed above, the weights used for calculating the weighted averages may be determined at least partially based in spatial distances between beams. According to the embodiment of Fig. 3, receive beams and transmit beams which are adjacent to each other in the spatial domain have subsequent indexes in receive beam set/grid Gr and the transmit beam set/grid Gl, respectively. Thus, the amount of the differences between beam indexes may be used to determine the weights. Considering the above example, the weights w may for example be determined as follows: $w = \frac{1}{n}$ for mRSRP(r-n, l, x, t), $w = \frac{1}{m}$ for mRSRP(r+m, l, x, t), $w = \frac{1}{i}$ for mRSRP(r, 1-i, x, t) and $w = \frac{1}{j}$ for mRSRP(r, l+j, x,t). The weighted average to estimate eRSRP(r, l, x, t) may then be calculated as follows:

$$eRSRP(r, l, x, t) = \sum_{r' \neq r, l' \neq l, t' < t}^{R, L, t-D} w(r', l', t') * mRSRP2(r', l', t')$$

where D is the length of the memory, selected by implementation.

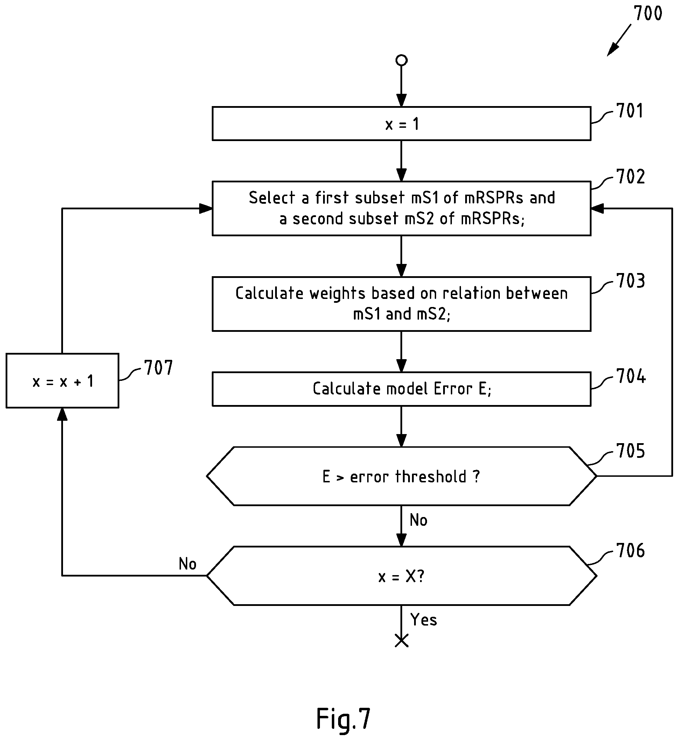

Alternatively, the weights could be determined for the "memoryless" approach as shown in Fig. 7 illustrating a exemplary embodiment of determining weights.

Actions of flow chart 700 are performed iteratively for each network node of network nodes 200-1 to 200-3.

In action 701, x is set to 1 such that actions 702 to 705 of the first iteration are performed for network node x=1, i.e. network node 200-1.

In action 702 a first subset mS1 comprising mRSRPs and a second subset mS2 comprising mRSRPs is selected. The first subset mS1 and the second subset mS2 only comprises mRSRPs which were measured for candidate positioning beam pairs of the first subset of candidate positioning beam pairs representing a transmit beam of network node x at measurement time t. Moreover, the first subset mS1 may comprise different mRSRPs than the second subset mS2. For example the first subset mS1 and the second subset mS2 are compelements, and the union of the first subset mS1 and the second subset mS2 equals all mRSRPs which were measured for candidate positioning beam pairs of the first subset of candidate positioning beam pairs representing a transmit beam of network node x at measurement time t.

In action 703, weights are calculated based on a relation between mS1 and mS2.

To this end, the relation between mS1 and mS2 may be defined as follows:

$$\widehat{mS1}(r, l, x, t) = \sum_{r' \neq r, l' \neq l}^{R, L} w(r', l', x, t) * mS2(r', l', x, t).$$

Based on this definition, the weights may then be calculated as follows:

$$\hat{w}(r', l', x, t) = \arg\min\left(|mS1 - \widehat{mS1}|^2\right).$$

In action 704, the model error E is calculated based on the weights obtained in action 703.

Without limiting the present disclosure, the error model E may be calculated as follows:

$$E = \left\|mS1 - \sum_{r' \neq r, l' \neq l} \hat{w}(r', l', x, t) * mS2(r', l', x, t)\right\|^2.)$$

If the calculated model error E is greater than a predetermined error threshold, the flow chart returns to action 702 where different subsets mS1 and mS2 as in the previous iteration(s) are selected. Otherwise, the weights obtained in action 703 are used for calculating the weighted average(s).

In action 706, it is checked whether x is equal to X (i.e. X = 3). If x is equal to x, this means that actions 702 to 705 have been performed for each network node of network nodes 200-1 to 200-3 and flow chart 700 is terminated. Otherwise, x is incremented by one (action 707) and actions 702 to 705 of the next iteration are performed for the next network node.

Alternatively, the weighted average(s) could be calculated with a "variable memory size" as disclosed above in more detail. To this end, for each candidate positioning beam pair of the second subset of candidate positioning beam pairs, only mRSRPs that were measured within a measurement time window (i.e. "variable memory size" approach) may be available (e.g. can be used) for calculating the respective weighted average of mRSRPs. The length of the measurement time window is denoted by T in the following. It may be determined (e.g. set) to correspond to or to be less than the coherence time, i.e. -4/fD, where fD is the maximum Doppler shift. To estimate eRSRP (r, l, x, t), only mRSRPs that were measured within the time window t-T are for example used for calculating the respective weighted average according to the "variable memory size" approach.

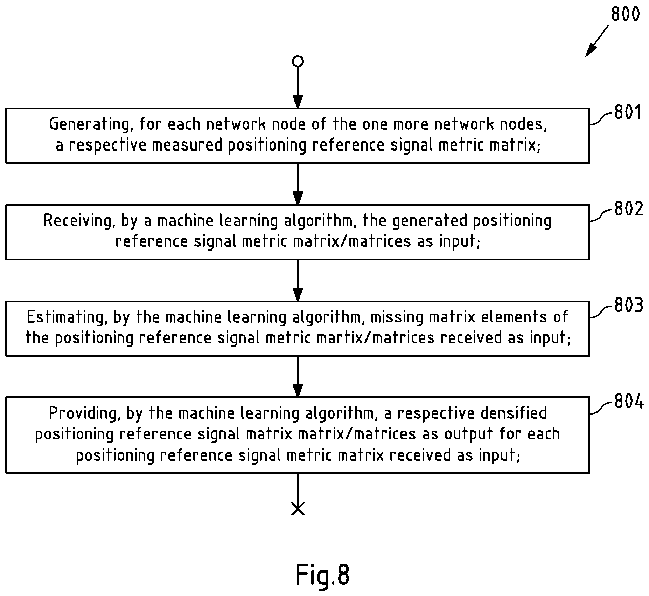

Fig. 8 is a flow chart 600 illustrating another exemplary embodiment of action 403 of flow chart 400 of Fig. 4 relating to estimating the PRS metrics.

In action 801, UE 100 generates, for each network node of network nodes 200-1 to 200-3, a respective measured PRS metric matrix.

As disclosed above, it is assumed that UE 100 measures, for each candidate positioning beam pair of the first subset of candidate positioning beam pairs, a respective Reference Signal Received Power (RSRP) in action 402. In the following, it is thus assumed that the PRS metrics generated in action 801 are generated based on the mRSRPs measured in action 403. In particular, for each network node x of network nodes 200-1 to 200-3, a respective RSRP matrix $M_x \in R^{R \times L}$ may be generated based on the mRSRPs measured for candidate positioning beam pairs representing a transmit beam of the network node x as follows:

$$M_x(r, l, t) = \begin{cases} mRSRP(r, l, x, t), & r \in S_{UE}, l \in S_x \\ -\infty, otherwise \end{cases}, \quad x = 1{:}X \quad (1).$$

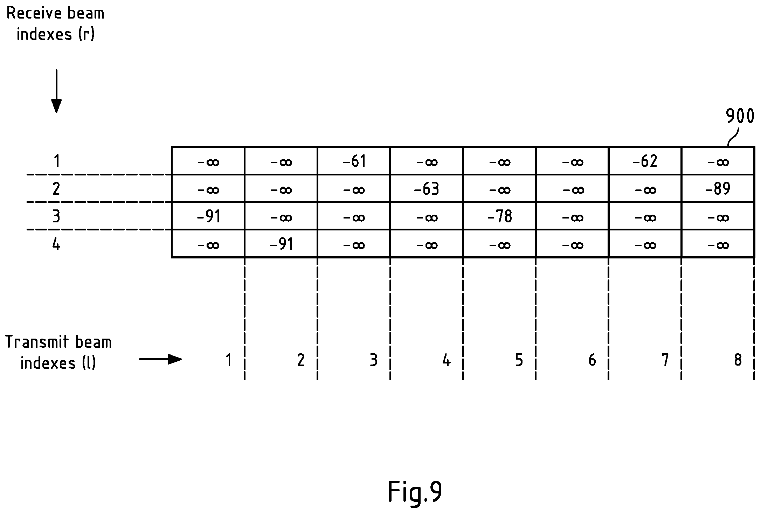

For example, if there are the following mRSRPs for network node x at measurement time t: mRSRP (1, 3, x, t) = -61 dBm, mRSRP (1, 7, x, t) = - 62 dBm, mRSRP (2, 4, x, t) = -63 dBm, mRSRP (2, 8, x, t) = - 89 dBm, mRSRP 3, 1, x, t) = -91 dBm, mRSRP (3, 5, x, t) = -78 dBm, mRSRP (4,2, x, t) = -91 dBm, the RSRP matrix $M_x(r, l, t)$ 900 as illustrated in Fig. 9 may be obtained in action 801. It is to be understood that the receive beam indexes r and the transmit beam indexes l are only included for illustrative purposes in Fig. 9 and that they are not part of the RSRP matrix $M_x(r, l, t)$ 900.

As a result of action 801, RSRP matrices $M_1$, $M_2$ and $M_3$ are obtained.

In action 802, the RSRP matrices $M_1$, $M_2$ and $M_3$ generated in action 801 are received by a machine learning algorithm as input. The machine learning algorithm estimates the missing matrix elements (i.e. the matrix elements having the value $-\infty$) of the RSRP matrices $M_1$, $M_2$ and $M_3$ (action 803) and provides, for each of the RSRP matrices $M_1$, $M_2$ and $M_3$, a respective densified RSRP matrix $O_x$ where all matrix elements of the respective input matrix $M_x$ having the value $-\infty$ (i.e. the missing matrix elements) are replaced with an estimated RSRP as output (action 804).

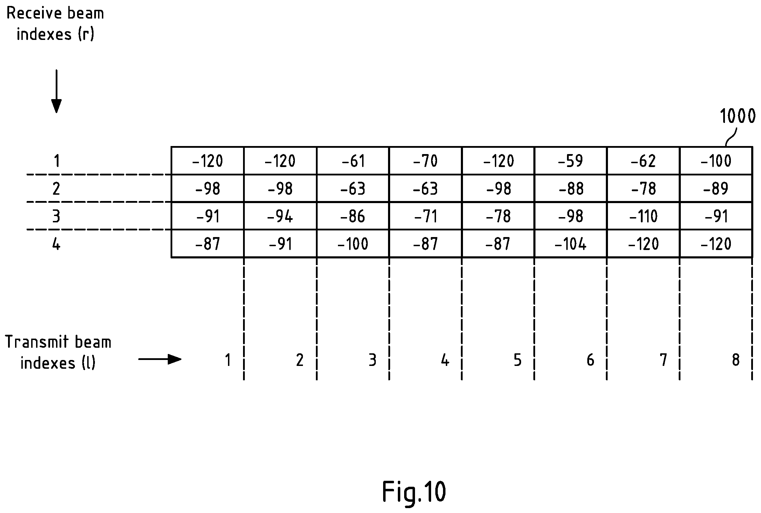

An example of a densified RSRP matrix $O_x(r, l, t)$1000 where all matrix elements of the respective input matrix $M_x(r, l, t)$ 900 of Fig. 9 having the value $-\infty$ (i.e. the missing matrix elements) are replaced with an estimated RSRP is shown in Fig. 10. Densified RSRP matrix $O_x(r, l, t)$ 1000 may be obtained in action 803 as output of the machine learning algorithm. It is to be understood that the receive beam indexes r and the transmit beam indexes l are only included for illustrative purposes in Fig. 9 and that they are not part of the densified RSRP matrix $O_x(r, l, t)$1000.

As disclosed above in more details, the machine learning algorithm may be implemented as one of:

(i) a deep neural network (DNN), or
(ii) a convolutional neural network (CNN), or
(iii) a generative adversial network (GAN), or
(iv) a long-short term memory (LSTM), or
(v) a time delay neural network (TDNN).

In an exemplary DNN implementation, the RSRP matrices M1, M2 and M3 received as input may be processed in parallel to estimate the RSRPs at the position of the missing matrix elements (i.e.. the matrix elements having the value $-\infty$). Accordingly, each network node of the network nodes 200-1 to 200-3 may be treated independently and no information may be shared between these different processing channels. In an exemplary CNN implementation, the RSRP matrices M1, M2 and M3 received as input may be processed jointly to estimate the RSRPs at the position of the missing matrix elements (i.e. the matrix elements having the value $-\infty$). For example, the CNN will learn to exploit the distance between any pair of network nodes or their degree of collinearity with the UE 100.

The exemplary DNN and CNN implementations are examples of implementations where the machine learning algorithm does (e.g. only) receive one respective PRS metric matrix $M_x$ or $M_x(t)$ for each network node x of the network nodes 200-1 to 200-3 (x = 1:X). They may employ a Rectified Linear Unit (ReLu) output activation function or a Swish output activation function.

In an exemplary LSTM or TDNN implementation, the LSTM or TDNN receives, for each network node x of the network nodes 200-1 to 200-3 (x = 1:X), a respective set of at least two PRS metric matrices $M_x(t1)$ and $M_x(t2)$ and respective associated UE 100 specific orientation matrices $A_x(t1)$ and $A_x(t2)$ as input. The respective UE 100 specific orientation matrices $A_x(t1)$ and $A_x(t2)$ could be obtained from or determined based on one or more sensors (e.g. gyroscope) of UE 100. Additionally receiving the respective associated UE 100 specific orientation matrices $A_x(t1)$ and $A_x(t2)$ may enable (e.g. the machine learning algorithm) to adapt RSRP matrices $M_x(t1)$ and $M_x(t2)$ which comprise RSRP measured with different UE 100 orientations at different measurement times t1 and t2.

All RSRP matrices $M_x(t)$ having a time stamp t within a measurement time window are part of the respective set. The length of the measurement time window may be variable, for example it may be determined to be proportional to the speed of UE 100. To give a non limiting example, the length of the measurement time window may be determined (e.g. set) to correspond to or to be less than the coherence time, i.e. -4/fD, where fD is the maximum Doppler shift.

In the following, the complexity for an CNN implementation is exemplary analyzed based on computational costs. Obtaining a respective densified RSRP matrix $O_x$ for each network node x of the network nodes 200-1 to 200-3, consists of performing N transformations $f_n(W_n x_n + b_n)$, where N is the number of layers of the DNN, $f_n$ is the activation function at the output of layer n, $x_n$, $W_n$ and $b_n$ are the inputs, weight matrix and biases of the n-th layer. For convolutional kernels, the complexity is $2HB(C_{in}J^2 + 1)C_{out}$, where H, B and $C_{in}$ are the input tensor dimensions, J is the core width and $C_{out}$ is the number of output channels. For an implementation with two layers, the operational cost is

$$\frac{R}{a}\frac{L}{b}(XJ_1^2 + 1)X_i + \frac{R}{a}\frac{L}{b}(X_iJ_2^2 + 1)X \approx \frac{R}{a}\frac{L}{b}(J_2^2 + J_1^2)XX_i$$ FLOPs. If we select $J_1 = J_2 = X_i = X$, the maximum cost of densifying the RSRP matrix is $\overline{\overline{C_1}} = \frac{2R}{a}\frac{L}{b}X^4$ FLOPs.

The approximate cost for performing an exhaustive beam sweep are $C_1 = 2R \cdot X \cdot P \cdot L \cdot F \cdot \log_2 F$ FLOPs, where F is the FFT size and P is the number of consecutive PRS symbols e.g $P \in \{1, 2, 4, 6, 8, 12\}$.

The CNN implementation comes at a cost $C_t = \overline{\overline{C_1}} + \overline{C_1} = \frac{2R}{a}\frac{L}{b}X^4 + 2\frac{C_1}{ab} = \frac{C_1}{ab}\left(2 + \frac{X^3}{PF\log_2 F}\right) = p\,C_1$

FLOPs, $p = \frac{\left(2 + \frac{X^3}{PF\log_2 F}\right)}{ab}$, where $\overline{C_1}$ is the approximate cost of actions 401 to 402 and $\overline{\overline{C_1}}$ is the approximate cost of action 403. In general, for more hidden layers N >2, the fraction p can be approximated by $p = \frac{\left(2 + \frac{NX^3}{2PF\log_2 F}\right)}{ab}$.

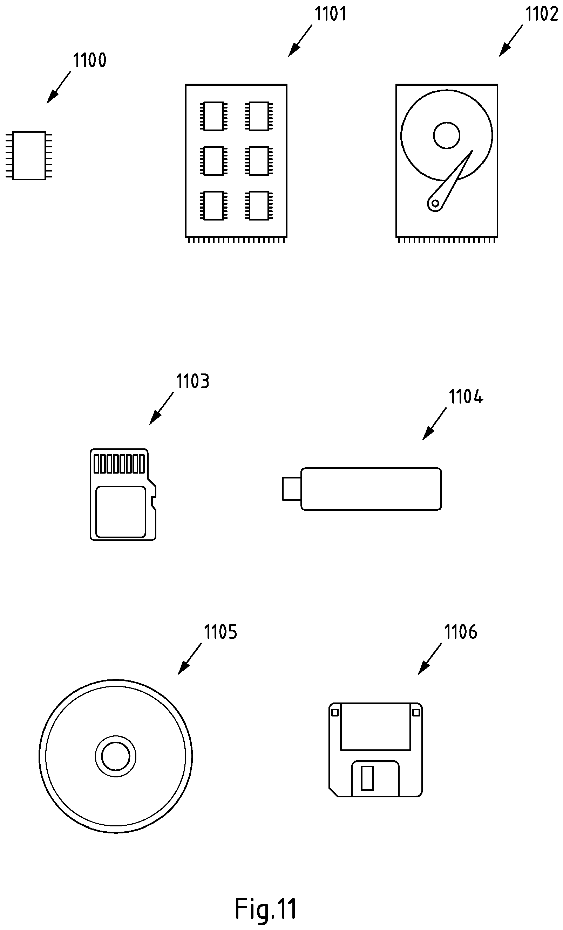

Fig. 11 is a schematic illustration of examples of tangible and non-transitory computer-readable storage media according to the present disclosure that may for example be used to implement memory 102 of Fig. 1 or memory 202 of Fig. 2. To this end, Fig. 10 displays a flash memory 1100, which may for example be soldered or bonded to a printed circuit board, a solid-state drive 1101 comprising a plurality of memory chips (e.g. Flash memory chips), a magnetic hard drive 1102, a Secure Digital (SD) card 1103, a Universal Serial Bus (USB) memory stick 1104, an optical storage medium 1105 (such as for example a CD-ROM or DVD) and a magnetic storage medium 1106.

Moreover, the following exemplary embodiments are to be understood to be disclosed:

Exemplary embodiment 1:

A terminal device comprising at least one processor and at least one memory including computer program code, the at least one memory and the computer program code configured to, with the at least one processor, cause the terminal device at least to perform:

- measuring, for each candidate positioning beam pair of a first subset of candidate positioning beam pairs, at least one respective positioning reference signal metric, wherein the first subset of candidate positioning beam pairs is a subset of a plurality of candidate positioning beam pairs, wherein each candidate positioning beam pair of the plurality of candidate positioning beam pairs represents a combination of a respective receive beam of the terminal device and a respective transmit beam of a respective network node of one or more network nodes;
- estimating, for each candidate positioning beam pair of a second subset of candidate positioning beam pairs, at least one respective positioning reference signal metric at least partially based on the measured positioning reference signal metrics, wherein the second subset of candidate positioning beam pairs comprises one or more candidate positioning beam pairs of the plurality of candidate positioning beam pairs that is/are not part of the first subset of candidate positioning beam pairs;
- selecting, at least partially based on the measured positioning reference signal metrics and the estimated positioning reference signal metrics, one or more candidate positioning beam pairs from the plurality of candidate positioning beam pairs as positioning beam pairs for downlink positioning.

Exemplary embodiment 2:

A terminal device according to embodiment 1, wherein the plurality of candidate positioning beam pairs represents (e.g. all) available combinations of receive beams of the terminal device and transmit beams of the one or more network nodes.

Exemplary embodiment 3:

A terminal device according to any of embodiments 1 and 2, the at least one memory and the computer program code further configured to, with the at least one processor, cause the terminal device to perform:

- determining the first subset of candidate positioning beam pairs.

Exemplary embodiment 4:

A terminal device according to any of embodiments 1 to 3, wherein the first subset of candidate positioning beam pairs is determined by at least one of:

(i) selecting candidate positioning beam pairs from the plurality of candidate positioning beam pairs; or
(ii) randomly selecting candidate positioning beam pairs from the plurality of candidate positioning beam pairs; or
(iii) selecting, for each network node of the one or more network nodes, candidate positioning beam pairs from the plurality of candidate positioning beam pairs representing at least substantially equally spaced receive beams of the terminal device and/or at least substantially equally spaced transmit beams of the respective network node; or
(iv) selecting candidate positioning beam pairs from the plurality of candidate positioning beam pairs based on at least one of (i) beam widths of the beams, or (ii) spatial diversity of the beams, or (iii) time.

Exemplary embodiment 5:

A terminal device according to any of embodiments 1 to 4, wherein the at least one respective positioning reference signal metric is or represents at least one of:

(i) a Received Signal Strength Indicator, RSSI; or
(ii) a Reference Signal Received Power, RSRP; or
(iii) a Signal-to-Noise Ratio, SNR; or
(iv) a power of the strongest channel tap; or
(v) a Carrier-to-interference Ratio, CIR.

Exemplary embodiment 6:

A terminal device according to any of embodiments 1 to 5, wherein the at least one respective positioning reference signal metric is estimated for each candidate positioning beam pair of the second subset of candidate positioning beam pairs at least partially based on the measured positioning reference signal metrics by:

- calculating, for each candidate positioning beam pair of the second subset of candidate positioning beam pairs, a respective weighted average of the measured positioning reference signal metrics.

Exemplary embodiment 7:

A terminal device according to embodiment 6, wherein at least two positioning reference signal metrics measured for respective candidate positioning beam pairs of the first subset of candidate positioning beam pairs are used for calculating the respective weighted average of measured positioning reference signal metrics, and/or

wherein, for each candidate positioning beam pair of the second subset of candidate positioning beam pairs, (e.g. only) positioning reference signal metrics measured for respective candidate positioning beam pairs of the first subset of candidate positioning beam pairs representing a respective transmit beam of the same respective network node like the respective candidate positioning beam pair of the second subset of candidate positioning beam pairs are used for calculating the respective weighted average of measured positioning reference signal metrics, and/or wherein, for each candidate positioning beam pair of the second subset of candidate positioning beam pairs, (e.g. only) positioning reference signal metrics that were (i) most recently measured or (ii) measured within a measurement time window are used for calculating the respective weighted average of measured positioning reference signal metrics

Exemplary embodiment 8:

A terminal device according to any of embodiments 6 and 7, wherein at least one weight used for calculating, for at least one respective candidate positioning beam pair of the second subset of candidate positioning beam pairs, the respective weighted average of measured positioning reference signal metrics is determined at least partially based on at least one of

(i) a spatial distance between, or
(ii) beam widths of, or
(iii) antenna correlation information associated with

at least one beam represented by the respective candidate positioning beam pair of the second subset of candidate positioning beam pairs and at least one beam represented by the respective candidate positioning beam pairs of the first subset of candidate positioning beam pairs, and/or
wherein at least one weight used for calculating, for at least one respective candidate positioning beam pair of the second subset of candidate positioning beam pairs, the respective weighted average of measured positioning reference signal metrics is determined at least partially based on a time of measurement of at least one measured positioning reference signal metrics of the measured positioning reference signal metrics.

Exemplary embodiment 9:

A terminal device according to any of embodiments 1 to 5, wherein the at least one respective positioning reference signal metric is estimated for each candidate positioning beam pair of the second subset of candidate positioning beam pairs at least partially based on the measured positioning reference signal metrics by using a machine learning algorithm.

Exemplary embodiment 10:

A terminal device according to embodiment 9, wherein the machine learning algorithm is implemented as one of:

(i) a deep neural network, or
(ii) a convolutional neural network, or
(iii) a generative adversial network, or
(iv) a long-short term memory, or
(v) a time delay neural network.

Exemplary embodiment 11:

A terminal device according to any of embodiments 9 and 10, wherein the machine learning algorithm receives one or more positioning reference signal metric matrices as input, wherein the one or more positioning reference signal metric matrices comprise(s) the measured positioning reference signal metrics as matrix elements.

Exemplary embodiment 12:

A terminal device according to embodiment 11, wherein each of the positioning reference signal metric matrices (e.g. only) comprises respective positioning reference signal metrics measured for respective candidate positioning beam pairs of the first subset of candidate positioning beam pairs representing a respective transmit beam of the same respective network node.

Exemplary embodiment 13:

A terminal device according to any of embodiments 11 and 12, wherein the measured positioning reference signal metrics are positioned in the one or more positioning reference signal metric matrices at least partially based on spatial distances between beams represented by the candidate positioning beam pairs of the first subset of candidate positioning beam pairs.

Exemplary embodiment 14:

A method, performed at least by a terminal device, the method comprising:

- measuring, for each candidate positioning beam pair of a first subset of candidate positioning beam pairs, at least one respective positioning reference signal metric, wherein the first subset of candidate positioning beam pairs is a subset of a plurality of candidate positioning beam pairs, wherein each candidate positioning beam pair of the plurality of candidate positioning beam pairs represents a combination of a respective receive beam of the terminal device and a respective transmit beam of a respective network node of one or more network nodes;
- estimating, for each candidate positioning beam pair of a second subset of candidate positioning beam pairs, at least one respective positioning reference signal metric at least partially based on the measured positioning reference signal metrics, wherein the second subset of candidate positioning beam pairs comprises one or more candidate positioning beam pairs of the plurality of candidate positioning beam pairs that is/are not part of the first subset of candidate positioning beam pairs;
- selecting, at least partially based on the measured positioning reference signal metrics and the estimated positioning reference signal metrics, one or more candidate positioning beam pairs from the plurality of candidate positioning beam pairs as positioning beam pairs for downlink positioning.

Exemplary embodiment 15:

A method according to embodiment 14, wherein the plurality of candidate positioning beam pairs represents (e.g. all) available combinations of receive beams of the terminal device and transmit beams of the one or more network nodes.

Exemplary embodiment 16:

A method according to any of embodiments 14 and 15 further comprising:

- determining the first subset of candidate positioning beam pairs.

Exemplary embodiment 17:

A method according to any of embodiments 14 to 16, wherein the first subset of candidate positioning beam pairs is determined by at least one of:

(i) selecting candidate positioning beam pairs from the plurality of candidate positioning beam pairs; or
(ii) randomly selecting candidate positioning beam pairs from the plurality of candidate positioning beam pairs; or
(iii) selecting, for each network node of the one or more network nodes, candidate positioning beam pairs from the plurality of candidate positioning beam pairs representing at least substantially equally spaced receive beams of the terminal device and/or at least substantially equally spaced transmit beams of the respective network node; or
(iv) selecting candidate positioning beam pairs from the plurality of candidate positioning beam pairs based on at least one of (i) beam widths of the beams, or (ii) spatial diversity of the beams, or (iii) time.

Exemplary embodiment 18:

A method according to any of embodiments 14 to 17, wherein the at least one respective positioning reference signal metric is or represents at least one of:

(i) a Received Signal Strength Indicator, RSSI; or
(ii) a Reference Signal Received Power, RSRP; or
(iii) a Signal-to-Noise Ratio, SNR; or
(iv) a power of the strongest channel tap; or
(v) a Carrier-to-interference Ratio, CIR.

Exemplary embodiment 19:

A method according to any of embodiments 14 to 18, wherein the at least one respective positioning reference signal metric is estimated for each candidate positioning beam pair of the second subset of candidate positioning beam pairs at least partially based on the measured positioning reference signal metrics by:

- calculating, for each candidate positioning beam pair of the second subset of candidate positioning beam pairs, a respective weighted average of the measured positioning reference signal metrics.

Exemplary embodiment 20:

A method according to embodiment 19, wherein at least two positioning reference signal metrics measured for respective candidate positioning beam pairs of the first subset of candidate positioning beam pairs are used for calculating the respective weighted average of measured positioning reference signal metrics, and/or

wherein, for each candidate positioning beam pair of the second subset of candidate positioning beam pairs,(e.g. only) positioning reference signal metrics measured for respective candidate positioning beam pairs of the first subset of candidate positioning beam pairs representing a respective transmit beam of the same respective network node like the respective candidate positioning beam pair of the second subset of candidate positioning beam pairs are used for calculating the respective weighted average of measured positioning reference signal metrics, and/or wherein, for each candidate positioning beam pair of the second subset of candidate positioning beam pairs, (e.g. only) positioning reference signal metrics that were (i) most recently measured or (ii) measured within a measurement time window are used for calculating the respective weighted average of measured positioning reference signal metrics

Exemplary embodiment 21:

A method according to any of embodiments 19 and 20, wherein at least one weight used for calculating, for at least one respective candidate positioning beam pair of the second subset of candidate positioning beam pairs, the respective weighted average of measured positioning reference signal metrics is determined at least partially based on at least one of

(i) a spatial distance between, or
(ii) beam widths of, or
(iii) antenna correlation information associated with

at least one beam represented by the respective candidate positioning beam pair of the second subset of candidate positioning beam pairs and at least one beam represented by the respective candidate positioning beam pairs of the first subset of candidate positioning beam pairs, and/or wherein at least one weight used for calculating, for at least one respective candidate positioning beam pair of the second subset of candidate positioning beam pairs, the respective weighted average of measured positioning reference signal metrics is determined at least partially based on a time of measurement of at least one measured positioning reference signal metrics of the measured positioning reference signal metrics.

Exemplary embodiment 22:

A method according to any of embodiments 14 to 18, wherein the at least one respective positioning reference signal metric is estimated for each candidate positioning beam pair of the second subset of candidate positioning beam pairs at least partially based on the measured positioning reference signal metrics by using a machine learning algorithm.

Exemplary embodiment 23:

A method according to embodiment 22, wherein the machine learning algorithm is implemented as one of:

(i) a deep neural network, or
(ii) a convolutional neural network, or
(iii) a generative adversial network, or
(iv) a long-short term memory, or
(v) a time delay neural network.

Exemplary embodiment 24:

A method according to any of embodiments 22 and 23, wherein the machine learning algorithm receives one or more positioning reference signal metric matrices as input, wherein the one or more positioning reference signal metric matrices comprise(s) the measured positioning reference signal metrics as matrix elements.

Exemplary embodiment 25:

A method according to embodiment 24, wherein each of the positioning reference signal metric matrices (e.g. only) comprises respective positioning reference signal metrics measured for respective candidate positioning beam pairs of the first subset of candidate positioning beam pairs representing a respective transmit beam of the same respective network node.

Exemplary embodiment 26:

A method according to any of embodiments 24 and 25, wherein the measured positioning reference signal metrics are positioned in the one or more positioning reference signal metric matrices at least partially based on spatial distances between beams represented by the candidate positioning beam pairs of the first subset of candidate positioning beam pairs.

Exemplary embodiment 27:

A computer-readable storage medium comprising program instructions of a computer program code stored thereon for causing an apparatus to perform a method according to any of embodiments 14 to 26.

Exemplary embodiment 28:

A computer program code, the computer program code when executed by a processor of an apparatus causing the apparatus to perform a method according to any of embodiments 14 to 26.
Any presented connection in the described embodiments is to be understood in a way that the involved components are operationally coupled. Thus, the connections can be direct or indirect with any number or combination of intervening elements, and there may be merely a functional relationship between the components.
Further, as used in this text, the term 'circuitry' refers to any of the following:

(a) hardware-only circuit implementations (such as implementations in only analog and/or digital circuitry)
(b) combinations of circuits and software (and/or firmware), such as: (i) to a combination of processor(s) or (ii) to sections of processor(s)/ software (including digital signal processor(s)), software, and memory(ies) that work together to cause an apparatus, such as a mobile phone, to perform various functions) and
(c) to circuits, such as a microprocessor(s) or a section of a microprocessor(s), that require software or firmware for operation, even if the software or firmware is not physically present.

This definition of 'circuitry' applies to all uses of this term in this text, including in any claims. As a further example, as used in this text, the term 'circuitry' also covers an implementation of merely a processor (or multiple processors) or section of a processor and its (or their) accompanying software and/or firmware. The term 'circuitry' also covers, for example, a baseband integrated circuit or applications processor integrated circuit for a mobile phone.
Any of the processors mentioned in this text, in particular but not limited to processors 101 and 201 of Figs. 1 and 2, could be a processor of any suitable type. Any processor may comprise but is not limited to one or more microprocessors, one or more processor(s) with accompanying digital signal processor(s), one or more processor(s) without accompanying digital signal processor(s), one or more special-purpose computer chips, one or more field-programmable gate arrays (FPGAS), one or more controllers, one or more application-specific integrated circuits (ASICS), or one or more computer(s). The relevant structure/hardware has been programmed in such a way to carry out the described function.
Moreover, any of the actions or steps described or illustrated herein may be implemented using executable instructions in a general-purpose or special-purpose processor and stored on a computer-readable storage medium (e.g., disk, memory, or the like) to be executed by such a processor. References to 'computer-readable storage medium' should be understood to encompass specialized circuits such as FPGAs, ASICs, signal processing devices, and other devices.
Moreover, any of the actions described or illustrated herein may be implemented using executable instructions in a general-purpose or special-purpose processor and stored on a computer-readable storage medium (e.g., disk, memory, or the like) to be executed by such a processor. References to 'computer-readable storage medium' should be understood to encompass specialized circuits such as FPGAs, ASICs, signal processing devices, and other devices.

The wording "A, or B, or C, or a combination thereof" or "at least one of A, B and C" or "at least one of A, B and/or C" may be understood to be not exhaustive and to include at least the following: (i) A, or (ii) B, or (iii) C, or (iv) A and B, or (v) A and C, or (vi) B and C, or (vii) A and B and C.

It will be understood that the embodiments disclosed herein are only exemplary, and that any feature presented for a particular exemplary embodiment may be used with any aspect of the present disclosure on its own or in combination with any feature presented for the same or another particular exemplary embodiment and/or in combination with any other feature not mentioned. It will further be understood that any feature presented for an example embodiment in a particular category may also be used in a corresponding manner in an example embodiment of any other category.

**Claims**

1. A terminal device comprising:

   - means for measuring, for each candidate positioning beam pair of a first subset of candidate positioning beam pairs, at least one respective positioning reference signal metric, wherein said first subset of candidate positioning beam pairs is a subset of a plurality of candidate positioning beam pairs, wherein each candidate positioning beam pair of said plurality of candidate positioning beam pairs represents a combination of a respective receive beam of said terminal device and a respective transmit beam of a respective network node of one or more network nodes;
   - means for estimating, for each candidate positioning beam pair of a second subset of candidate positioning beam pairs, at least one respective positioning reference signal metric at least partially based on said measured positioning reference signal metrics, wherein said second subset of candidate positioning beam pairs comprises one or more candidate positioning beam pairs of said plurality of candidate positioning beam pairs that is/are not part of said first subset of candidate positioning beam pairs;
   - means for selecting, at least partially based on said measured positioning reference signal metrics and said estimated positioning reference signal metrics, one or more candidate positioning beam pairs from said plurality of candidate positioning beam pairs as positioning beam pairs for downlink positioning.

2. A terminal device according to claim 1, wherein said plurality of candidate positioning beam pairs represents available combinations of receive beams of said terminal device and transmit beams of said one or more network nodes.

3. A terminal device according to any of claims 1 and 2, further comprising:

   - means for determining said first subset of candidate positioning beam pairs.

4. A terminal device according to any of claims 1 to 3, wherein said first subset of candidate positioning beam pairs is determined by at least one of:

   (i) selecting candidate positioning beam pairs from said plurality of candidate positioning beam pairs; or
   (ii) randomly selecting candidate positioning beam pairs from said plurality of candidate positioning beam pairs; or
   (iii) selecting, for each network node of said one or more network nodes, candidate positioning beam pairs from said plurality of candidate positioning beam pairs representing at least substantially equally spaced receive beams of said terminal device and/or at least substantially equally spaced transmit beams of said respective network node; or
   (iv) selecting candidate positioning beam pairs from said plurality of candidate positioning beam pairs based on at least one of (i) beam widths of the beams, or (ii) spatial diversity of the beams, or (iii) time.

5. A terminal device according to any of claims 1 to 4, wherein said at least one respective positioning reference signal metric is or represents at least one of:

   (i) a Received Signal Strength Indicator, RSSI; or
   (ii) a Reference Signal Received Power, RSRP; or
   (iii) a Signal-to-Noise Ratio, SNR; or
   (iv) a power of the strongest channel tap; or

(v) a Carrier-to-interference Ratio, CIR.

6. A terminal device according to any of claims 1 to 5, wherein said at least one respective positioning reference signal metric is estimated for each candidate positioning beam pair of said second subset of candidate positioning beam pairs at least partially based on said measured positioning reference signal metrics by:

- calculating, for each candidate positioning beam pair of said second subset of candidate positioning beam pairs, a respective weighted average of said measured positioning reference signal metrics.

7. A terminal device according to claim 6, wherein at least two positioning reference signal metrics measured for respective candidate positioning beam pairs of said first subset of candidate positioning beam pairs are used for calculating said respective weighted average of measured positioning reference signal metrics, and/or

wherein, for each candidate positioning beam pair of said second subset of candidate positioning beam pairs, the positioning reference signal metrics measured for respective candidate positioning beam pairs of said first subset of candidate positioning beam pairs representing a respective transmit beam of the same respective network node like said respective candidate positioning beam pair of said second subset of candidate positioning beam pairs are used for calculating said respective weighted average of measured positioning reference signal metrics, and/or

wherein, for each candidate positioning beam pair of said second subset of candidate positioning beam pairs, positioning reference signal metrics that were (i) most recently measured or (ii) measured within a measurement time window are used for calculating said respective weighted average of measured positioning reference signal metrics

8. A terminal device according to any of claims 6 and 7, wherein at least one weight used for calculating, for at least one respective candidate positioning beam pair of said second subset of candidate positioning beam pairs, said respective weighted average of measured positioning reference signal metrics is determined at least partially based on at least one of

(i) a spatial distance between, or
(ii) beam widths of, or
(iii) antenna correlation information associated with

at least one beam represented by said respective candidate positioning beam pair of said second subset of candidate positioning beam pairs and at least one beam represented by said respective candidate positioning beam pairs of said first subset of candidate positioning beam pairs, and/or wherein at least one weight used for calculating, for at least one respective candidate positioning beam pair of said second subset of candidate positioning beam pairs, said respective weighted average of measured positioning reference signal metrics is determined at least partially based on a time of measurement of at least one measured positioning reference signal metrics of said measured positioning reference signal metrics.

9. A terminal device according to any of claims 1 to 5, wherein said at least one respective positioning reference signal metric is estimated for each candidate positioning beam pair of said second subset of candidate positioning beam pairs at least partially based on said measured positioning reference signal metrics by using a machine learning algorithm.

10. A terminal device according to claim 9, wherein said machine learning algorithm is implemented as one of:

(i) a deep neural network, or
(ii) a convolutional neural network, or
(iii) a generative adversial network, or
(iv) a long-short term memory, or
(v) a time delay neural network.

11. A terminal device according to any of claims 9 and 10, wherein said machine learning algorithm receives one or more positioning reference signal metric matrices as input, wherein said one or more positioning reference signal metric matrices comprise(s) said measured positioning reference signal metrics as matrix elements.

12. A terminal device according to claim 11, wherein each of said positioning reference signal metric matrices comprises respective positioning reference signal metrics measured for respective candidate positioning beam pairs of said first subset of candidate positioning beam pairs representing a respective transmit beam of the same respective network node.

13. A terminal device according to any of claims 11 and 12, wherein said measured positioning reference signal metrics are positioned in said one or more positioning reference signal metric matrices at least partially based on spatial distances between beams represented by said candidate positioning beam pairs of said first subset of candidate positioning beam pairs.

14. A method, performed at least by a terminal device, the method comprising:

- measuring, for each candidate positioning beam pair of a first subset of candidate positioning beam pairs, at least one respective positioning reference signal metric, wherein said first subset of candidate positioning beam pairs is a subset of a plurality of candidate positioning beam pairs, wherein each candidate positioning beam pair of said plurality of candidate positioning beam pairs represents a combination of a respective receive beam of said terminal device and a respective transmit beam of a respective network node of one or more network nodes;
- estimating, for each candidate positioning beam pair of a second subset of candidate positioning beam pairs, at least one respective positioning reference signal metric at least partially based on said measured positioning reference signal metrics, wherein said second subset of candidate positioning beam pairs comprises one or more candidate positioning beam pairs of said plurality of candidate positioning beam pairs that is/are not part of said first subset of candidate positioning beam pairs;
- selecting, at least partially based on said measured positioning reference signal metrics and said estimated positioning reference signal metrics, one or more candidate positioning beam pairs from said plurality of candidate positioning beam pairs as positioning beam pairs for downlink positioning.

15. Computer program code, the computer program code when executed by a processor of an apparatus causing said apparatus to perform:

- measure, for each candidate positioning beam pair of a first subset of candidate positioning beam pairs, at least one respective positioning reference signal metric, wherein said first subset of candidate positioning beam pairs is a subset of a plurality of candidate positioning beam pairs, wherein each candidate positioning beam pair of said plurality of candidate positioning beam pairs represents a combination of a respective receive beam of said terminal device and a respective transmit beam of a respective network node of one or more network nodes;
- estimate, for each candidate positioning beam pair of a second subset of candidate positioning beam pairs, at least one respective positioning reference signal metric at least partially based on said measured positioning reference signal metrics, wherein said second subset of candidate positioning beam pairs comprises one or more candidate positioning beam pairs of said plurality of candidate positioning beam pairs that is/are not part of said first subset of candidate positioning beam pairs;
- select, at least partially based on said measured positioning reference signal metrics and said estimated positioning reference signal metrics, one or more candidate positioning beam pairs from said plurality of candidate positioning beam pairs as positioning beam pairs for downlink positioning.

104 — Communication
Interface

100

101 — Processor

102 — Program Memory

103 — Main Memory

Fig.1

204 — Communication
Interface

200

201 — Processor

202 — Program Memory

203 — Main Memory

Fig.2

Fig.3

EP 4 181 414 A1

400

Determining a first subset of candidate positioning beam pairs — 401

Measuring, for each candidate positioning beam pair of the first subset of candidate positioning beam pairs, at least one respective positioning reference signal metric; — 402

Estimating, for each candidate positioning beam pair of a second subset of candidate positioning beam pairs, at least one respective positioning reference signal metric at least partially based on the measured positioning reference signal metrics; — 403

Selecting, at least partially based on the measured positioning reference signal metrics and the estimated positioning reference signal metrics, one or more candidate positioning beam pairs from a plurality of candidate positioning beam pair as positioning beam pairs for downlink positioning; — 404

Fig.4

500

x = 1 ⌐501

Selecting R/a receive beams and L/b transmit beams ⌐502

Add all available combinations of selected R/a receive beams and selected L/b transmit beams to the first subset of candidate positioning beam pairs ⌐503

x = x + 1 ⌐505

No ⟨ x = X? ⟩ ⌐504

Yes

Fig.5

600

601

Calculating, for each candidate positioning beam pair of the second subset of candidate positioning beam pairs, a respective weighted average of measured positioning reference signal metrics;

Fig.6

700

x = 1 — 701

Select a first subset mS1 of mRSPRs and a second subset mS2 of mRSPRs; — 702

Calculate weights based on relation between mS1 and mS2; — 703

Calculate model Error E; — 704

E > error threshold ? — 705

No

x = X? — 706

No

x = x + 1 — 707

Yes

Fig.7

800

Generating, for each network node of the one more network nodes, a respective measured positioning reference signal metric matrix; ⌐801

Receiving, by a machine learning algorithm, the generated positioning reference signal metric matrix/matrices as input; ⌐802

Estimating, by the machine learning algorithm, missing matrix elements of the positioning reference signal metric martix/matrices received as input; ⌐803

Providing, by the machine learning algorithm, a respective densified positioning reference signal matrix matrix/matrices as output for each positioning reference signal metric matrix received as input; ⌐804

Fig.8

Receive beam
indexes (r)

900

| | 1 | 2 | 3 | 4 | 5 | 6 | 7 | 8 |
|---|---|---|---|---|---|---|---|---|
| 1 | -∞ | -∞ | -61 | -∞ | -∞ | -∞ | -62 | -∞ |
| 2 | -∞ | -∞ | -∞ | -63 | -∞ | -∞ | -∞ | -89 |
| 3 | -91 | -∞ | -∞ | -∞ | -78 | -∞ | -∞ | -∞ |
| 4 | -∞ | -91 | -∞ | -∞ | -∞ | -∞ | -∞ | -∞ |

Transmit beam
indexes (l)

Fig.9

EP 4 181 414 A1

Receive beam
indexes (r)

1000

| | 1 | 2 | 3 | 4 | 5 | 6 | 7 | 8 |
|---|---|---|---|---|---|---|---|---|
| 1 | -120 | -120 | -61 | -70 | -120 | -59 | -62 | -100 |
| 2 | -98 | -98 | -63 | -63 | -98 | -88 | -78 | -89 |
| 3 | -91 | -94 | -86 | -71 | -78 | -98 | -110 | -91 |
| 4 | -87 | -91 | -100 | -87 | -87 | -104 | -120 | -120 |

Transmit beam
indexes (l) →   1   2   3   4   5   6   7   8

Fig.10

1100

1101

1102

1103

1104

1105

1106

Fig.11

Europäisches
Patentamt

European
Patent Office

Office européen
des brevets

## EUROPEAN SEARCH REPORT

Application Number

EP 21 20 7933

### DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2020/186205 A1 (ZHOU ZHENGYI [CN] ET AL) 11 June 2020 (2020-06-11)<br>* paragraph [0034] – paragraph [0074]; figures 1A-5D *<br>* paragraph [0093] – paragraph [0108]; figure 9C *<br>* paragraph [0128] – paragraph [0143]; figure 12A * | 1-15 | INV.<br>H04B7/0456<br>H04B7/06<br>H04B7/08<br>G06N3/02 |
| X<br><br>A | WO 2021/041859 A1 (IDAC HOLDINGS INC [US]) 4 March 2021 (2021-03-04)<br>* paragraph [0127] – paragraph [0151]; figures 5A, 5B, 6, 7 *<br>* paragraph [0168] – paragraph [0171]; figure 18 * | 1,9-15<br><br>2-8 | |
| X<br><br><br>A | US 2018/205435 A1 (NAIR JINESH PARAMESHWARAN [IN] ET AL) 19 July 2018 (2018-07-19)<br>* paragraph [0019] *<br>* paragraph [0067] – paragraph [0087]; figures 2-3 *<br>* paragraph [0094] – paragraph [0107]; figures 5A-5B * | 1,14,15<br><br>2-13 | |

TECHNICAL FIELDS
SEARCHED       (IPC)

H04B
G06N

The present search report has been drawn up for all claims

| Place of search | Date of completion of the search | Examiner |
|---|---|---|
| Munich | 30 June 2022 | Cabañas Prieto, Ana |

EPO FORM 1503 03.82 (P04C01)

## ANNEX TO THE EUROPEAN SEARCH REPORT
## ON EUROPEAN PATENT APPLICATION NO.

EP 21 20 7933

This annex lists the patent family members relating to the patent documents cited in the above-mentioned European search report.
The members are as contained in the European Patent Office EDP file on
The European Patent Office is in no way liable for these particulars which are merely given for the purpose of information.

30-06-2022

| Patent document cited in search report | | Publication date | Patent family member(s) | | Publication date |
|---|---|---|---|---|---|
| US 2020186205 | A1 | 11-06-2020 | CN | 109818658 A | 28-05-2019 |
| | | | CN | 111373666 A | 03-07-2020 |
| | | | EP | 3716497 A1 | 30-09-2020 |
| | | | US | 2020186205 A1 | 11-06-2020 |
| | | | WO | 2019101051 A1 | 31-05-2019 |
| WO 2021041859 | A1 | 04-03-2021 | CN | 114503452 A | 13-05-2022 |
| | | | EP | 4022790 A1 | 06-07-2022 |
| | | | WO | 2021041859 A1 | 04-03-2021 |
| US 2018205435 | A1 | 19-07-2018 | NONE | | |

EPO FORM P0459

For more details about this annex : see Official Journal of the European Patent Office, No. 12/82